(19) Europäisches Patentamt
European Patent Office
Office européen des brevets

(11) **EP 4 693 042 A1**

(12) **EUROPEAN PATENT APPLICATION**

(43) Date of publication:
**11.02.2026 Bulletin 2026/07**

(21) Application number: **25192072.4**

(22) Date of filing: **28.07.2025**

(51) International Patent Classification (IPC):
**G06F 9/48** *(2006.01)* **G06F 11/34** *(2006.01)*
**G06N 20/00** *(2019.01)*

(52) Cooperative Patent Classification (CPC):
**G06F 9/4881; G06F 11/3404; G06F 11/3409;
G06F 11/3457; G06N 20/00;** G06F 2209/483;
G06F 2209/5011

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.08.2024 US 202463679602 P
24.06.2025 US 202519248450**

(71) Applicant: **Samsung Electronics Co., Ltd.
Suwon-si, Gyeonggi-do 16677 (KR)**

(72) Inventors:
• **CHEN, Hanqiu
San Jose, CA, 95134 (US)**
• **CHANG, Andrew
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **HARDWARE-AWARE SCHEDULING AND DATA ORCHESTRATION FOR BALANCED LLM TRAINING ON HETEROGENEOUS GPU CLUSTERS**

(57)    A scheduling system is disclosed. The scheduling system may include a simulator (435) to process information regarding a heterogeneous computing system (305). An intra-node scheduler (440) may determine whether individual nodes should use a tensor parallel approach or a data parallel approach. An inter-node scheduler (445) may schedule operations between the nodes. An evaluator (450) may evaluate a performance of the heterogeneous computing system (305).

FIG. 3

## Description

### FIELD

The disclosure relates generally to computing systems, and more particularly to heterogeneous computing systems for training.

### BACKGROUND

Computer training systems assume that the hardware used is homogeneous: that is, that all the hardware is the same across all the nodes of the computing system. While this assumption may be valid in some circumstances, there are computing systems that are heterogeneous, with hardware variations across the computing system. When the computing system is heterogeneous, training may have low efficiencies.

A need remains to support computing training systems that are heterogeneous.

### SUMMARY

A scheduling system may provide information about scheduling processing across and within nodes in a computing system. The scheduling system may receive information about a computing system, determine operations to be performed within each node and across nodes, and evaluate the performance of the computing system.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.

FIG. 1 shows a node for use in a heterogeneous computing system, according to embodiments of the disclosure.
FIG. 2 shows details of the machine of FIG. 1, according to embodiments of the disclosure.
FIG. 3 shows a heterogeneous computing system including the node of FIG. 1, according to embodiments of the disclosure.
FIG. 4 shows a system that may be used to schedule operations in the heterogeneous computing system of FIG. 3, according to embodiments of the disclosure.
FIG. 5 shows the difference between balanced and imbalanced computing in the heterogeneous computing system of FIG. 3, according to embodiments of the disclosure.
FIG. 6 shows the processing elements of FIG. 1 of the heterogeneous computing system of FIG. 3 connected to the memory pool of FIG. 1 via a switch, according to embodiments of the disclosure.
FIG. 7 shows how computation and communication may overlap in the heterogeneous computing system of FIG. 3.
FIG. 8A shows a flowchart of an example procedure for determining scheduling in the heterogeneous computing system of FIG. 3, according to embodiments of the disclosure.
FIG. 8B continues the flowchart of FIG. 8A of an example procedure for determining scheduling in the heterogeneous computing system of FIG. 3, according to embodiments of the disclosure.
FIG. 9A shows a flowchart of an example procedure for determining scheduling in the heterogeneous computing system of FIG. 3, according to embodiments of the disclosure.
FIG. 9B continues the flowchart of FIG. 9B of an example procedure for determining scheduling in the heterogeneous computing system of FIG. 3, according to embodiments of the disclosure.
FIG. 10 shows a flowchart of an example procedure for the machine of FIG. 4 to determine whether individual nodes in the heterogeneous computing system of FIG. 3 should use a tensor parallel approach or a data parallel approach, according to embodiments of the disclosure.
FIG. 11 shows a flowchart of an example procedure for scheduling inter-node computation and communication in the heterogeneous computing system of FIG. 3, according to embodiments of the disclosure.
FIG. 12 shows a flowchart of an example procedure for generating a report or configuration file describing scheduling in the heterogeneous computing system of FIG. 3, according to embodiments of the disclosure.
FIG. 13 shows a flowchart of an example procedure for using the memory pool of FIG. 1 to exchange data in the heterogeneous computing system of FIG. 3, according to embodiments of the disclosure.
FIG. 14 expands on the flowchart of FIG. 13 of an example procedure for exchanging data in the heterogeneous computing system of FIG. 3, according to embodiments of the disclosure.

FIG. 15 shows a flowchart of an example procedure for one node in the heterogeneous computing system of FIG. 3 to inform another node that data is ready to be retrieved by the other node, according to embodiments of the disclosure.

## DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Performing Large Language Model (LLM) training may involve using networks of computers, called nodes. Each node may process a portion of the training, with the nodes working together (and communicating with each other) to complete the overall training.

If all the hardware in the computing system is the same-that is, the computing system is homogeneous-then training may focus on the data being processed. However the data is divided among the nodes, it may be assumed that each node will process its portion of the data in roughly the same amount of time. Thus, each node runs at a high efficiency.

But not every computing system is homogeneous in nature. For example, university budgets might not permit an entire computer system to be purchased at one time. With equipment purchased over time, the equipment being purchased might have differing capabilities from pre-existing equipment. This arrangement leads to variations in the computing capabilities and differing memory capacities of nodes in the computing system: a heterogeneous computing system.

Because different nodes in a heterogeneous computing system may have different computing capabilities and different memory capacities, different nodes may effectively operate at different speeds. As a result, given equal workloads, one node may finish faster than another node. This consequence lowers the overall efficiency of the computing system, with more efficient nodes potentially being underutilized and less efficient nodes potentially being overburdened.

Another concern with computer training systems is the need to share data efficiently between nodes. Sending data using Remote Direct Memory Access (RDMA) may be relatively slow and inefficient. This issue is particularly significant when using heterogeneous computing systems, where memory capabilities across nodes may vary.

Embodiments of the disclosure address these problems by introducing hardware-aware scheduling. Using hardware-aware scheduling, scheduling operations between nodes (inter-node scheduling) may recognize the different hardware capabilities of each node and attempt to optimize the overall system efficiency by managing each node's capabilities independently, rather than assuming all nodes are equivalent.

Embodiments of the disclosure may also leverage new memory technologies, such as cache-coherent interconnect memories (a specific example of which is Compute Express Link® (CXL®) memory. Using cache-coherent interconnect memories, each processing element may use load/store instructions to directly access a common memory pool (which supports cache-coherent interconnect protocols), rather than providing the data to a processor which may then use RDMA to transfer the data to another node in the computing system.

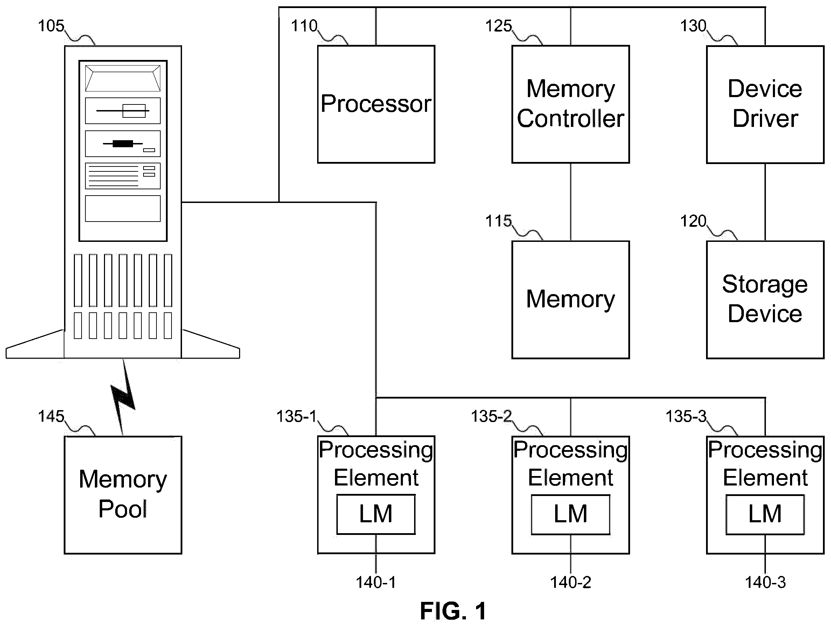

FIG. 1 shows a node for use in a heterogeneous computing system, according to embodiments of the disclosure. In FIG. 1, node 105, which may also be termed a host, a system, or a machine, may include processor 110, memory 115, and one or more storage devices (which may be referred to collectively as storage devices 120).

Processor 110, which may also be referred to as a host processor, may be any variety of processor. Processor 110, along with the other components discussed below, are shown outside the machine for ease of illustration: embodiments of the disclosure may include these components within the machine. While FIG. 1 shows a single processor 110, node 105 may include any number (one or more, without bound) of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115, which may also be referred to as a main memory, may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may also be implemented as a High Bandwidth Memory (HBM). Memory 115 may also be any desired combination of different memory types, and may be managed by memory controller 125. Memory 115 may also be implemented using any desired form factor. For example, memory 115 may include one or more memory modules, such as Dual Inline Memory Modules (DIMMs). Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115 or storage devices 120. Whereas memory 115 may be used to store data that is considered "short-term", storage devices 120 may be used to store data that is considered "long-term": that is, data that is expected to be retained for longer periods of time and that should be retained in a persistent manner, even if deliver of power to node 105 should be interrupted. Storage devices 120 may include a storage media and a controller to access the storage media, and may be accessed using device driver 130. While FIG. 1 shows one device driver 130 being used to manage access to both storage devices 120, embodiments of the disclosure may include more than one device driver 130, each used to manage access to one or more of storage devices 120.

Storage devices 120 may be associated with an accelerator. Such an accelerator may be used for, for example, near-data processing. That is, the accelerator may be used to process data closer to storage devices 120, to reduce or eliminate transfer of data from storage devices 120 into memory 115. The use of an accelerator for near-data processing may also offload processing from processor 110, as the accelerator may perform such processing instead of processor 110. Like processor 110, such an accelerator may implement a Reduced Instruction Set Computer (RISC) architecture or a Complex Instruction Set Computer (CISC) architecture (among other possibilities), and may be implemented using a Central Processing Unit (CPU), a Field Programmable Gate Array (FPGA), an Application-Specific Integrated Circuit (ASIC), a System-on-a-Chip (SoC), a Graphics Processing Unit (GPU), a General Purpose GPU (GPGPU), a Neural Processing Unit (NPU), or a Tensor Processing Unit (TPU).

The combination of storage devices 120 and accelerator may also be referred to as a computational storage device, computational storage unit, or computational device. Storage devices 120 and an accelerator may be designed and manufactured as a single integrated unit, or the accelerator may be separate from storage devices 120. The phrase "associated with" is intended to cover both a single integrated unit including both a storage device and an accelerator and a storage device that is paired with an accelerator but that are not manufactured as a single integrated unit. In other words, a storage device and an accelerator may be said to be "paired" when they are physically separate devices but are connected in a manner that enables them to communicate with each other. Further, in the remainder of this document, any reference to storage devices 120 may be understood to refer to both storage devices 120 and the accelerator either as physically separate but paired (and therefore may include the other device) or to both devices integrated into a single component as a computational storage unit.

In addition, the connection between the storage device and the paired accelerator might enable the two devices to communicate, but might not enable one (or both) devices to work with a different partner: that is, the storage device might not be able to communicate with another accelerator, and/or the accelerator might not be able to communicate with another storage device. For example, the storage device and the paired accelerator might be connected serially (in either order) to the fabric, enabling the accelerator to access information from the storage device in a manner another accelerator might not be able to achieve.

While FIG. 1 uses the generic term "storage device", embodiments of the disclosure may include any storage device formats that may be associated with computational storage, examples of which may include hard disk drives and Solid State Drives (SSDs). In addition, storage devices 120 may be of the same or different types. For example, a first storage device of storage devices 120 might be an SSD, whereas a second storage device of storage devices 120 might be a hard disk drive. Any reference to a specific type of storage device, such as an "SSD", below should be understood to include such other embodiments of the disclosure.

Processor 110 and storage devices 120 may communicate across a fabric (not shown in FIG. 1). This fabric may be any fabric along which information may be passed. Such fabrics may include fabrics that may be internal to node 105, and which may use interfaces such as Peripheral Component Interconnect Express (PCIe), Serial AT Attachment (SATA), or Small Computer Systems Interface (SCSI), among others. Such fabrics may also include fabrics that may be external to node 105, and which may use interfaces such as Ethernet, InfiniBand, or Fibre Channel, among others. In addition, such fabrics may support one or more protocols, such as Non-Volatile Memory Express (NVMe), NVMe over Fabrics (NVMe-oF), Simple Service Discovery Protocol (SSDP), or a cache-coherent interconnect protocol, such as the Compute Express Link ® (CXL®) protocol, among others. (Compute Express Link and CXL are registered trademarks of the Compute Express Link Consortium in the United States.) Thus, such fabrics may be thought of as encompassing both internal and external networking connections, over which commands may be sent, either directly or indirectly, to storage devices 120. In embodiments of the disclosure where such fabrics support external networking connections, storage devices 120 might be located external to node 105, and storage devices 120 might receive requests from a processor remote from node 105.

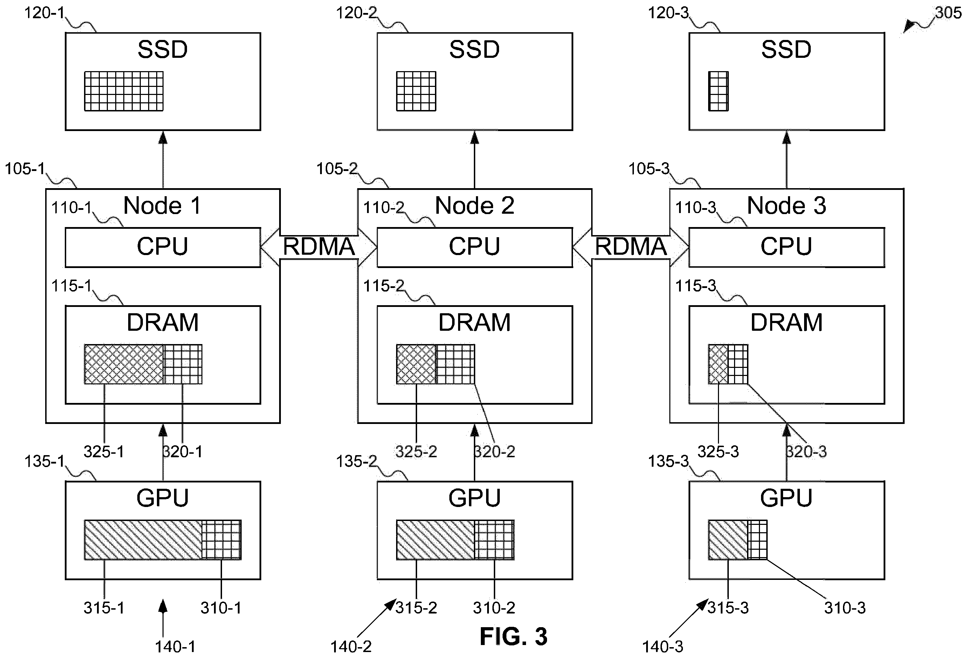

Node 105 may also include processing elements 135-1, 135-2, and 135-3 (which may be referred to collectively as processing elements 135). While FIG. 1 shows node 105 as including three processing elements 135, embodiments of the disclosure may support any number (one or more) of processing elements. In some embodiments of the disclosure, node 105 might also omit processing elements 135 entirely, as discussed further with reference to FIG. 3 below. Each processing element 135 may be implemented in any desired manner, including, for example, a CPU, an FPGA, an ASIC, an SoC, a GPU, a GPGPU, an NPU, a TPU, or an accelerator. In some embodiments of the disclosure, each processing element 135 may be implemented differently; in other embodiments of the disclosure, each processing element 135 may be implemented identically. When implemented identically, the capabilities of each processing element 135, such as capacity or speed, may be identical; otherwise, each processing element 135 might have different functionalities or speeds.

Processing elements 135 may include local memories 140-1, 140-2, and 140-3, respectively (which may be referred to collectively as local memories 140). Local memories 140 may be implemented as any desired local memory, including DRAM, SRAM, Persistent Random Access Memory, FRAM, NVRAM, MRAM, or HBM. As with memory 115, local memories 140 may also be implemented using any desired form factor. For example, local memories 140 may include one or more memory modules, such as DIMMs. In some embodiments of the disclosure, each local memory 140 may be implemented differently; in other embodiments of the disclosure, each local memory 140 may be implemented identically. When implemented identically, the capabilities of each local memory 140, such as capacity or speed, may be identical.

In some embodiments of the disclosure, node 105 may include as components processing elements 135. In other embodiments of the disclosure, processing elements 135 may be separate in other nodes connected to node 105 via some sort of connection, such as a network (not shown in FIG. 1), or may even be their own nodes (without any other hardware beyond the absolute necessary for processing element 135 to function as a node).

Node 105 may be part of a heterogeneous system. As the term implies, for a system to be heterogeneous, there may be differences in the hardware used in the system. For example, different nodes might have different processors 110, different memories 115, different storage devices 120, different processing elements 135, different local memories 140, or different local memories 140. Note that not every component needs to differ between two nodes for a system to be considered heterogeneous, but there should be *some* difference between nodes 105. In addition, if the connections between nodes 105 differs (for example, different types of cables or switches, or different interlink speeds), then nodes 105 may be considered different for purposes of the system being considered a heterogeneous system.

In some embodiments of the disclosure, node 105 may also be connected to memory pool 145. Memory pool 145 may be a pool of memory accessible to every node in a computing system, rather than just being dedicated to node 105. In some embodiments of the disclosure memory pool 145 may be implemented as a cache-coherent interconnect memory pool, such as a CXL memory pool. That is, memory pool 145 may be implemented using memory modules that are compliant with the CXL standard. Memory pool 145 may also be connected to node 105 and to other machines through a network or a switch (not shown in FIG. 1): this switch may also be a cache-coherent interconnect switch, such as a CXL switch that complies with the CXL standard. In some embodiments of the disclosure, memory pool 145 (and the switch to connect node 105 and memory pool 145) may be omitted.

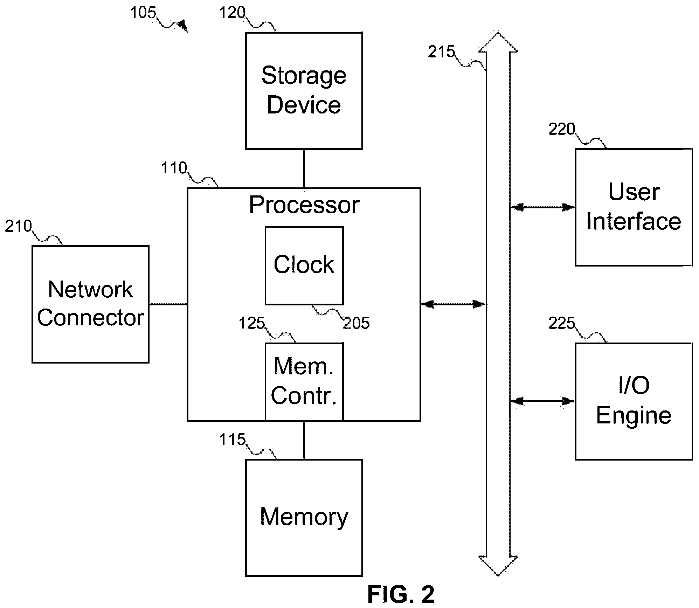

FIG. 2 shows details of the machine of FIG. 1, according to embodiments of the disclosure. In FIG. 2, typically, node 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

When implemented as a computing system (which may be referred to as a heterogeneous computing system in embodiments of the disclosure where each node may have different capabilities), embodiments of the disclosure may be similar to that shown in FIG. 3. In FIG. 3, nodes 105-1, 105-2, and 105-3 are shown as part of heterogeneous computing system 305, each of which may be some variation of node 105 of FIG. 1, and may be referred to collectively as nodes 105. Each node 105 is shown as including processor 110, memory 115, and storage device 120. That is, node 105-1 is shown as including processor 110-1, memory 115-1, and storage device 120-1, node 105-2 is shown as including processor 110-2, memory 115-2, and storage device 120-2, and node 105-3 is shown as including processor 110-3, memory 115-3, and storage device 120-3. (Processors 110-1, 110-2, and 110-3 may be referred to collectively as processors 110, memories 115-1, 115-2, and 115-3 may be referred to collectively as memories 115, and storage devices 120-1, 120-2, and 120-3 may be referred to collectively as storage devices 120.) But as discussed with reference to FIG. 1 above, there may be some differences in the operations of nodes 105, the components of nodes 105, and/or the connections between nodes 105 to justify considering the computing system heterogeneous.

Each node 105 may have an associated processing element 135. (As with FIG. 1, processing elements 135 are shown outside nodes 105 for ease of illustration: embodiments of the disclosure may include these components within the machine.) For example, FIG. 3 shows node 105-1 including GPU 135-1, node 105-2 including GPU 135-2, and node 105-3 including GPU 135-3, which may be referred to collectively as processing elements 135. (GPUs are one example of a type of processing elements 135, as discussed with reference to FIG. 1 above.) Each GPU 135 may also include its own local memory 140: for example, GPU 135-1 may include local memory 140-1, GPU 135-2 may include local memory 140-2, and GPU 135-3 may include local memory 140-3. Local memories 140-1, 140-2, and 140-3 may be referred to collectively as memories 140.

If every node 105 was identical, then the system of FIG. 3 would be considered a homogeneous computing system. But in some embodiments of the disclosure, nodes 105 may differ. That is, the capabilities of nodes 105 or their components-processor 110, memory 115, processing element 135, and/or local memory 140-may differ across nodes. In some embodiments of the disclosure, even within a single node different copies of a particular element might have differing capabilities. For example, node 105 might have multiple processing elements 135, each with different capabilities.

In this context, capabilities may include processing speed, number of processing cores, storage capacity, bandwidth, access time, and the like, depending on what element is being considered. For example, the capabilities of processing element 135 might include the processing speed and the number of cores in processing element 135, whereas the capabilities of memory 115 might include total capacity and bandwidth.

In some situations, local memories 140 may be sufficient to store all the data to be processed. For example, in training large language models (LLMs), data may be processed through multiple layers before a final result is determined. These data produced through the various layers may be termed activations, and storing these activations, particularly when not stored in local memories 140, may be termed activation offloading. The amount of data to be processed by each layer might be relatively small enough to fit entirely within local memory 140 of processing element 135 that is processing the data. But there might be situations in which local memory 140 is not necessarily large enough to store all the data to be processed. For example, in FIG. 3, each local memory 140 is shown as storing data. This data may be partitioned into two portions: one portion that is stored in local memory 140 (portions 310-1, 310-2, and 310-3), and a second portion that is stored externally to processing element (portions 315-1, 315-2, and 315-3). Portions 315-1, 315-2, and 315-3 may thus be stored in memories 115.

But it may also happen that local memories 115 are not large enough to store all the data that does not fit in local memories 140. Thus, for example, portions 315-1, 315-2, and 315-3 may also be divided into two sub-portions: one sub-portion (sub-portions 320-1, 320-2, and 320-3) may be stored in memories 115, and the second sub-portion (sub-portions 325-1, 325-2, and 325-3) may be stored outside memories 115: for example, in storage devices 120. Processing elements 135 may then move data among local memories 140, memories 115, and storage devices 120, as needed.

As may be seen, portions 310-1, 310-2, and 310-3 may vary in size, reflecting the differing capacities of local memories 140 (and therefore the heterogeneity of the computing system). This fact demonstrates one problem with performing LLM training in heterogeneous computing systems 305: because the capabilities of each node may vary, scheduling operations so that all nodes complete their respective operations at the same time is a greater challenge than in a homogeneous computing system. If the operations of nodes 105 are not coordinated to end at approximately the same times, and/or there are data dependencies between nodes 105 so that one node 105 is waiting for data from another node 105 to begin its processing, then some nodes may sit idle while waiting for other nodes to complete their processing, reducing the overall efficiency of heterogeneous computing system 305. Further, the nodes that are likely to be idle in such a situation are the nodes with the highest capabilities. The nodes with the highest capabilities are the ones that should be used most, so letting such nodes sit idle is inefficient.

Because nodes 105 may be working on different parts of the training of the LLM, it may be important for nodes to communicate with each other: for example, to share activations. Such communications may be handled through Remote Direct Memory Access (RDMA) commands, whereby one processor 110 writes data into memory 115 associated with another processor 110. But since it is processing elements 135 that may do most of the work in training the LLM, the entire data path actually involves sending data from processing elements 135 to memories 115, then processors 110 using RDMA to write the data into memories 115 of other nodes 105, and finally processing elements 135 of the other nodes 105 reading the data from memories 115.

Moving data between processing elements 135 and memories 115 is relatively efficient. For example, writing data by processing element 135 into memory 115 of the same node 105 may be handled through Peripheral Component Internet Exchange (PCIe) or some other bus, which may have a relatively high bandwidth, such as 20 gigabytes (GB)/second. But RDMA may have a lower bandwidth: perhaps only 12 GB/second. Thus, RDMA may serve as a bottleneck for sharing data between nodes 105. In addition, using RDMA may require installing a card that supports RDMA, such as an InfiniBand card, which may increase the cost of the node. This fact demonstrates a second problem with performing LLM training in heterogeneous computing systems 305: sharing data between nodes 105 may be inefficient.

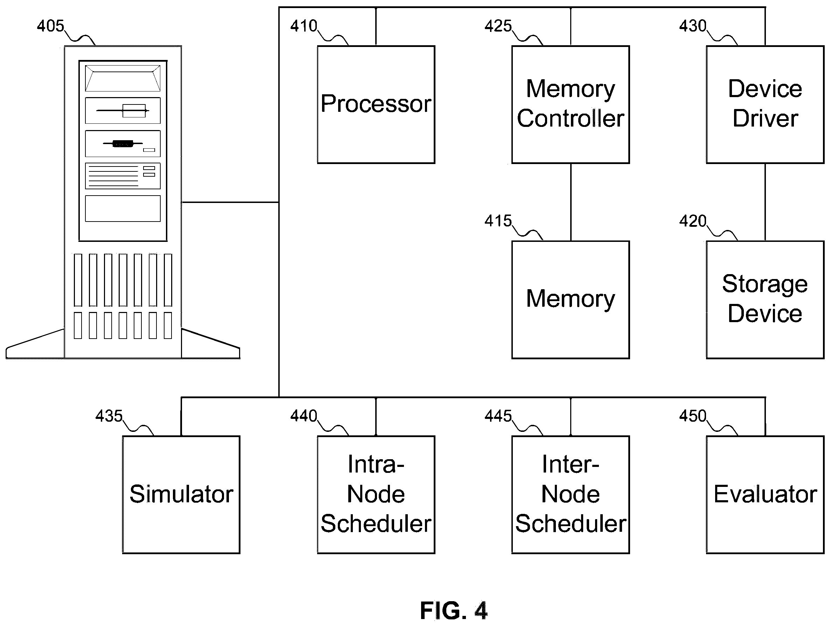

FIG. 4 shows a system that may be used to schedule operations in heterogeneous computing system 305 of FIG. 3, according to embodiments of the disclosure. Machine 405 (which may also be referred to as a scheduling system) may support improving the scheduling of operations between nodes 105 of FIG. 1 of heterogeneous computing system 305 of FIG. 3 by scheduling operations in a manner that factors in both the training to be performed and the capabilities of each node 105 of FIG. 1 in heterogeneous computing system 305 of FIG. 3. Machine 405 may be incorporated into (that is, part of) one of nodes 105 of FIG. 1, or machine 405 may be a separate machine from nodes 105.

Machine 405 may include components such as processor 410, memory 415, and storage device 420. Memory 415 and storage device 420 may be accessed using memory controller 425 and device driver 430. Processor 410, memory 415, storage device 420, memory controller 425, and device driver 430 may be similar to processor 110 of FIG. 1, memory 115 of FIG. 1, storage device 120 of FIG. 1, memory controller 125 of FIG. 1, and device driver 130 of FIG. 1.

Machine 405 may also include simulator 435, intra-node scheduler 440, inter-node scheduler 445, and evaluator 450. Simulator 435, intra-node scheduler 440, inter-node scheduler 445, and evaluator 450 may be implemented as software executing on processor 410, or may be implemented partially or wholly in hardware: for example, using CPUs, FPGAs, ASICs, SoCs, GPUs, GPGPUs, NPUs, TPUs, or accelerators. Simulator 435, intra-node scheduler 440, inter-node scheduler 445, and evaluator 450 may be implemented all similarly, or each may be implemented differently, as desired. For example, simulator 435 might be implemented as an FPGA, intra-node scheduler 440 and inter-node scheduler 445 might be implemented as GPUs, and evaluator 450 might be implemented as software executing on processor 410.

Simulator 435 may be configured to receive input about the LLM training to be performed and the capabilities of heterogeneous computing system 305 of FIG. 3. For example, simulator 435 may receive information about the LLM model structure, training strategy (parallelism, offloading), and the hardware system configurations of nodes 105 of FIG. 1 as well as components of nodes 105 of FIG. 1, such as processor 110 of FIG. 1, memory 115 of FIG. 1, processing element 135 of FIG. 1, local memory 140 of FIG. 1, and/or storage device 120 of FIG. 1. The hardware system configuration information may include the capacities of local memories 140 of FIG. 1, the inter-node and intra-node bandwidth (the bandwidth between processing elements 135 of FIG. 1 within node 105 of FIG. 1 and the bandwidth between nodes 105 of FIG. 1 in heterogeneous computing system 305 of FIG. 3), the capacities of memories 115 of FIG. 1, the capacity of memory pool 145 of FIG. 1, the capacities of storage devices 120 of FIG. 1, the computation capabilities of processor 110 of FIG. 1, and the computational capabilities of processing elements 135 of FIG. 1. Other information that may be input to simulator 435 may include the number of layers in the training, the hidden dimensions of the training, and the input data dimension.

This information may be provided in any desired manner: for example, as a JavaScript Object Notation (JSON) file. Simulator 435 may then output various information, such as the peak memory utilization of each processing element 135 of FIG. 1 in each node 105 of FIG. 1 of heterogeneous computing system 305 of FIG. 3, the memory latency of heterogeneous computing system 305 of FIG. 3, and the memory consumption of local memories 140 of FIG. 1, memories 115 of FIG. 1, and memory pool 145 of FIG. 1. This information may be referred to as a memory report. Simulator 435 may then output information resulting from an analysis of the input information: for example, the peak memory utilization of local memory 140 of FIG. 1, memory 115 of FIG. 1, memory pool 145 of FIG. 1, and/or storage device 120 of FIG. 1 for each processing element 135 of FIG. 1.

Intra-node scheduler 440 may be configured to take the information generated by simulator 435 and to determine information such as whether individual processing elements 135 of FIG. 1 in nodes 105 of FIG. 1 of heterogeneous computing system 305 of FIG. 3 should use a tensor parallel approach or a data parallel approach. The difference between tensor parallel and data parallel may relate to the size (the amount) of data processed by each processing element 135 of FIG. 1. For example, if the peak memory utilization of processing element 135 of FIG. 1 is greater than some function that factors in the capacities of local memory 140 of FIG. 1 for that processing element 135 of FIG. 1 and memory 115 of FIG. 1 (which may be shared across all processing elements 135 of FIG. 1 in node 105 of FIG. 1), a tensor parallel approach may be favored. Tensor parallel may be used where memory utilization may be a concern; data parallel may be used where memory utilization is not a concern. In some embodiments of the disclosure, each processing element 135 of FIG. 1 may be managed using a different approach; in other embodiments of the disclosure, all processing elements 135 of FIG. 1 may use the same approach (tensor parallel versus data parallel), but different nodes 105 of FIG. 1 in heterogeneous computing system 305 of FIG. 3 may use different approaches.

Inter-node scheduler 445 may be configured to take the capabilities of each processing element 135 of FIG. 1, the information about heterogeneous computing system 305 of FIG. 3 (as determined by simulator 435), and whether each processing element 135 of FIG. 1 is to use a tensor parallel approach or a data parallel approach (as determined by intra-node scheduler 440), and to allocate the number of batches to each node 105 of FIG. 1 in heterogeneous computing system 305 of FIG. 3. The objective of inter-node scheduler 445 is to attempt to allocate batches to processing elements 135 of FIG. 1 in proportion to their capabilities. In some embodiments of the disclosure (for example, where all processing elements 135 of FIG. 1 within node 105 of FIG. 1 are identical), the number of batches allocated to each processing element 135 of FIG. 1 in node 105 of FIG. 1 may be identical. In other embodiments of the disclosure, each processing element 135 of FIG. 1, even within node 105 of FIG. 1 in heterogeneous computing system 305 of FIG. 3, may be assigned different numbers of batches. Inter-node scheduler 445 may also be configured to indicate that activations may be stored in local memories 140 of FIG. 1 or offloaded to memories 115 of FIG. 1 or storage device 120 of FIG. 1, or to memory pool 145 of FIG. 1 (if heterogeneous computing system 305 of FIG. 3 includes memory pool 145 of FIG. 1). Inter-node scheduler 445 might even specify what activations are to be stored in local memory 140 of FIG. 1, memory 115 of FIG. 1, memory pool 145 of FIG. 1, and/or storage device 120 of FIG. 1. In general, data is stored in local memory 140 of FIG. 1 if it is available; otherwise, data may be stored in memory 115 of FIG. 1, memory pool 145 of FIG. 1, and/or storage device 120 of FIG. 1, with the other representing relative preference (but such preferences may be adjusted for each heterogeneous computing system 305 of FIG. 3 and/or each model to be used in training heterogeneous computing system 305 of FIG. 3).

Another optimization that is of value is to parallelize computation and communication between nodes 105 of FIG. 1 of heterogeneous computing system 305 of FIG. 3. For example, while processing elements 135 of FIG. 1 are processing data for a layer, processor 110 of FIG. 1 may be managing data movement by preloading/prefetching data to be used by processing elements 135 of FIG. 1 in the next layer. To achieve this optimization, it is useful to analyze data dependencies: what data depends on what other data. The data dependencies may then guide what data should be preloaded or prefetched into local memory 140 of FIG. 1 for the next layer of processing. Inter-node scheduler 445 may therefore produce also information that may be used in attempting to overlap computation within each node 105 of FIG. 1 and communication between nodes 105 of FIG. 1 in heterogeneous computing system 305 of FIG. 3.

Inter-node scheduler 445 may then output this information, which may represent one possible scheduling of data across nodes 105 of FIG. 1 in heterogeneous computing system 305 of FIG. 3.

Finally, evaluator 450 may evaluate the performance of the training based on the scheduling determined by inter-node scheduler 445. For example, evaluator 450 may determine the latency of calculation of the training based on the scheduling determined by inter-node scheduler 445: how long that training take to process a chunk of data. Evaluator 450 may also calculate the latency of communication, such as the prefetch time. If the performance is not yet at an optimal level, evaluator 450 may provide feedback to inter-node scheduler 445 to iteratively attempt to optimize scheduling of the LLM training in heterogeneous computing system 305 of FIG. 3. When the optimal solution is determined-for example, when no iterative improvement appears to be possible-evaluator 450 may generate a final report that reports the end-to-end latency estimation, memory consumption, and dataflow. This final report may also include a configuration file that may be used with (loaded into) a training framework, so that the training framework may perform hardware-aware scheduling.

A configuration file, as used with a training framework, may be in a JavaScript Object Notation (JSON) format, a Python format, a YAML Ain't Markup Language (YAML) format, an INI format (a plaintext file format), an eXtensible Markup Language (XML) format, or a HyperText Transfer Protocol (HTTP) format, among other possibilities. A configuration file may include various parameters associated with the training framework, along with the values to be used with those parameters. Thus, a configuration file may include parameters associated with scheduling as determined by machine 405, so that the training framework may leverage the scheduling as determined by machine 405.

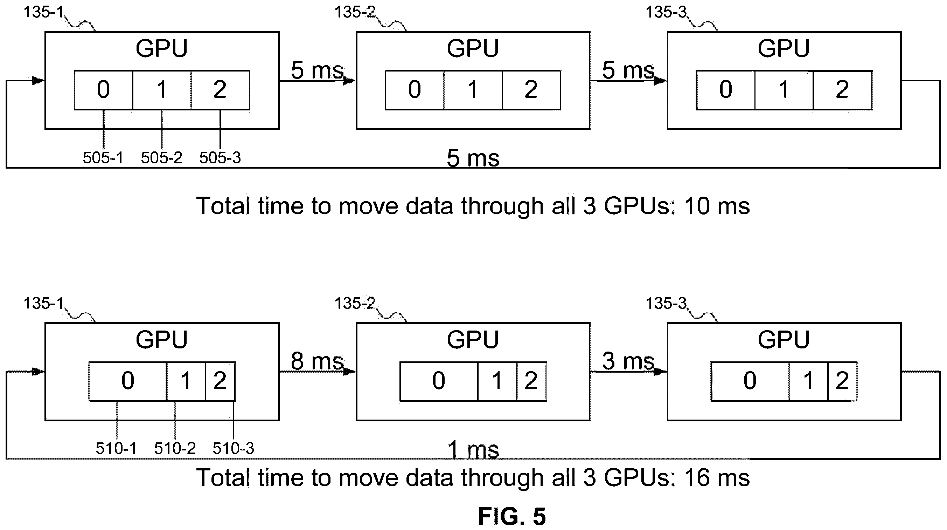

FIG. 5 shows the difference between balanced and imbalanced computing in heterogeneous computing system 305 of FIG. 3, according to embodiments of the disclosure. In FIG. 5, at the top, each GPU 135 is processing data, and each data is of approximately equal size-that is, the batches of data are balanced. For example, the batch of data processed for the first layer, batch 505-1, by GPU 135-1 may be approximately the same size as the batches of data processed for the second and third layers 505-2 and 505-3, and the same is true for GPUs 135-2 and 135-3. (Batches 505-1, 505-2, and 505-3 may be referred to collectively as batches 505.) Because each batch 505 is the approximately same size, amount of time needed to transmit data from one GPU 135 to another may be approximately the same amount of time: for example 5 ms. Thus, to move each batch of data through all three GPUs 135 would take approximately 10 ms, plus the processing time at each GPU (for example, 5 ms to move a batch of data from GPU 135-1 to GPU 135-2 and 5 ms to move the batch of data from GPU 135-2 to GPU 135-3: there is no need to move the data from GPU 135-3 back to GPU 135-1, since that batch of data has already been processed by GPU 135-1). The same analysis is true regardless of which GPU 135 is the first to process the data in a given layer.

But when the batches of data are not approximately equal in size-that is, the batches of batches of data are imbalanced-or the interconnect links between GPUs 135 do not deliver data at the same speed, then the time needed to move data between GPUs 135 is not necessarily the same. As shown in FIG. 5 at the bottom, batches of data 510-1, 510-2, and 510-3 are of unequal size. Batches 510-1, 510-2, and 510-3 may be referred to collectively as batches 510. If batch 510-1 begins processing in GPU 135-1, batch 510-2 begins processing in GPU 135-2, and batch 510-3 begins processing in GPU 135-3, then the time required to send batch 510-1 from GPU 135-1 to GPU 135-2 may be 8 ms, whereas the time required to send batch 510-2 from GPU 135-2 to GPU 135-3 may be 3 ms, and the time required to send batch 510-3 from GPU 135-3 to GPU 135-1 may be 1 ms. Because GPUs 135 may be synchronized, some of GPUs 135 may be idle while they wait for batch 510-1 to be transmitted from one GPU 135 to another.

FIG. 5 may represent operations such as all gather and reduce scatter operations, but may also apply to other types of operations that may be performed by GPUs 135. Thus, adjusting scheduling to account for heterogeneity in computing capabilities across nodes 105 of FIG. 1 in heterogeneous computing system 305 of FIG. 3 might allow for computations to end approximately synchronized at nodes 105 of FIG. 1 in heterogeneous computing system 305 of FIG. 3, changing the sizes of batches 510 to account for such heterogeneity might result in inefficiencies due to the time required to transmit data of different sizes between GPUs 135.

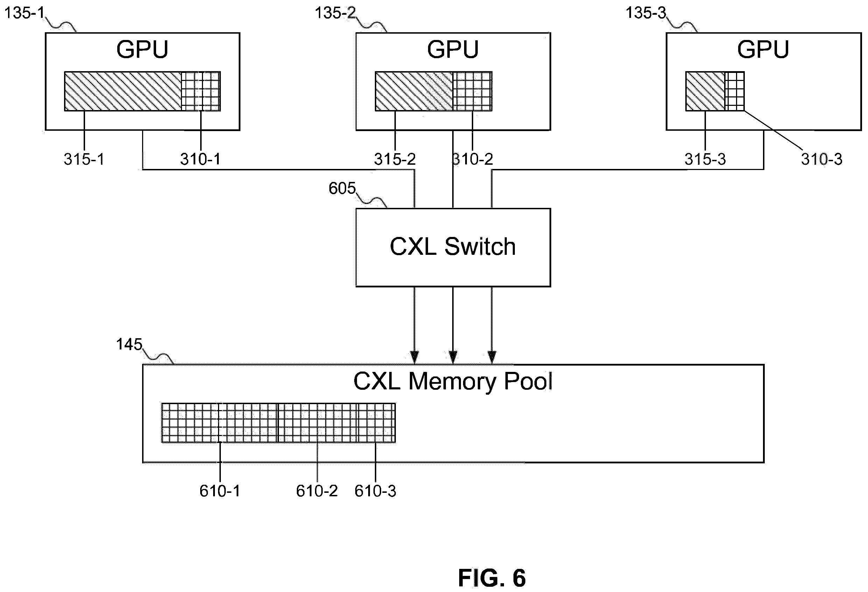

To account for the differing transmission times for data, other modifications to heterogenous computing system 305 of FIG. 3 may be made. FIG. 6 shows processing elements 135 of FIG. 1 of heterogeneous computing system 305 of FIG. 3 connected to memory pool 145 of FIG. 1 via a switch, according to embodiments of the disclosure. In FIG. 6, processing elements 135 are each connected to switch 605, which in turn is connected to memory pool 145. In some embodiments of the disclosure, memory pool 145 and switch 605 may support a cache-coherent interconnect protocol, such as the CXL protocol. By supporting a cache-coherent interconnect protocol, GPUs 135 may be able to issue load or store requests to write data to or read data from memory pool 145 in the same manner that GPUs 135 might be able to write data to or read data from memory 115 of FIG. 1. (Note that load or store requests may be distinguished from write or read requests that might be used to write data to or read data from a storage device that supports protocols such as Fibre Channel, Internet Small Computer Systems Interface (iSCSI), NVMe, NVMe-oF, and the like, even though such protocols might still be across a PCIe bus.)

Using memory pool 145 may support a more efficient data exchange between GPUs 135. For example, because the connection between GPUs 135 and memory pool 145 may support using a PCIe bus along the entire path, the bandwidth limitations that may occur when using RDMA to share data between GPUs 135 may be avoided, permitting a faster data transfer. Further, fewer requests are needed to complete a transfer of data between GPUs 135 using memory pool 145 than using RDMA. Using RDMA, three requests are used: a store request to transfer data from local memory 140 of FIG. 1 of source GPU 135 to memory 115 of FIG. 1 of source node 105, an RDMA request to transfer the data from memory 115 of FIG. 1 of source node 105 into memory 115 of FIG. 1 of destination node 105, and a load request to transfer the data from memory 115 of FIG. 1 of destination node 105 into local memory 140 of FIG. 1 of destination GPU 135. By using memory pool 145, only two requests are needed: one request to store the data in memory pool 145 by source GPU 135, and one request to load the data from memory pool 145 by destination GPU 135.

As may be seen, memory pool 145 may also be used by GPUs 135 to offload data for which there is insufficient room on local memory 140 of FIG. 1. As discussed with reference to FIG. 3 above, portions 310 may be stored in local memory 140 of FIG. 1, and portions 315 may be offloaded from local memory 145 of FIG. 1. This offloading may be memory pool 145: thus, portions 315-1, 315-2, and 315-3 may be stored as portions 610-1, 610-2, and 610-3, respectively, in memory pool 145.

For GPUs 135 to be able to share data using memory pool 145, it is important that destination GPU 135 loading the batch of data from memory pool 145 know the address where the data was stored in memory pool 145 by source GPU 135. There are various in which this information may be shared.

In some embodiments of the disclosure, each GPU 135 may be assigned a buffer-an address range-within memory pool 145 that may be used to share data with another GPU 135. Thus, for each unique pair of GPUs 135, there may be a unique buffer in memory pool 145 where either GPU 135 may store data to be shared with the other GPU 135. Because each GPU 135 in the pair knows the address of the buffer, there is no need to explicitly share the address where the data is stored. In the example of FIG. 6, where there are three GPUs 135, there may be three such buffers; in general, if there are $n$ GPUs 135, there are $\frac{n \times (n-1)}{2}$ such buffers.

In other embodiments of the disclosure, the buffer may act as a queue, such as a circular queue, where data may be added at one end of the queue and read from the other end of the queue. The queue may then have associated pointers, often referred to as head and tail pointers, that may be used to identify what data is currently in the queue. In some embodiments of the disclosure, data is added to the head of the queue and removed the tail of the queue; in other embodiments the roles of the head pointer and tail pointer are reversed. Each GPU 135 may then update the appropriate pointers when data is added to or removed from the queue.

In still other embodiments of the disclosure, source GPU 135 may store the data in any desired address in memory pool 145. For example, source GPU 135 may request that a portion of memory pool 145 be allocated to it, and may receive an address associated with that assigned portion of memory pool 145. Source GPU 135 may then write the data to that address. In such embodiments of the disclosure, because the address where data may be shared is not predetermined, source GPU 135 may send a message to destination GPU 135 specifying the address where the data is stored. But such a message is generally much shorter than sending the data itself in a message, and therefore sharing data via memory pool 145 is still effectively more efficient than sharing data in some other way, even factoring in the cost of a message specifying the address for the data.

While the above discussion focuses on using memory pool 145 to exchange data between GPU 135 in different nodes 105 of FIG. 1, embodiments of the disclosure may also use memory pool 145 to exchange data between GPUs 135 within a single node 105 of FIG. 1.

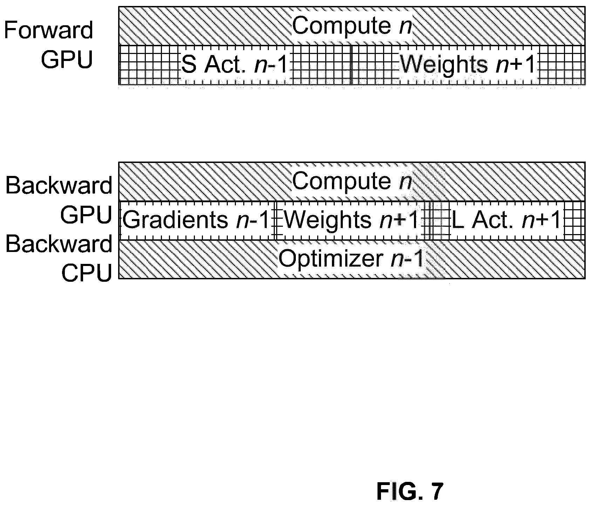

FIG. 7 shows how computation and communication may overlap in heterogeneous computing system 305 of FIG. 3. In FIG. 7, LLM training may include both forward and backward processing. Boxes shown with diagonal hatching are computational processes, and boxes shown with square crosshatching are communication processes. During forward processing, GPU 135 of FIG. 1 of node 105 of FIG. 1 may perform computations for the current layer of the model. At the same time, processor 110 of FIG. 1 of node 105 of FIG. 1 (the same node 105 of FIG. 1 that includes GPU 135 of FIG. 1 that is performing the processing of the data in the current layer of the model) may store activations generated by GPU 135 of FIG. 1 in the previous layer of the model, and may load weights to be used in the next layer of the model by GPU 135 of FIG. 1. Thus, if the current layer being processed by GPU 135 of FIG. 1 is layer n, processor 110 of FIG. 1 may store activations from layer n-1, and may load weights for layer n+1 (which may be described as preloading or prefetching data for the next layer).

But processing of a given layer may also involve backward processing, where activities during the current layer may affect data for the previous layer. Thus, in backward processing, while GPU 135 of FIG. 1 is processing data for the current layer, processor 110 of FIG. 1 may be storing gradients for the previous layer, and loading weights and activations for the next layer. In addition, processor 110 of FIG. 1 may also be performing an optimizer status update for the previous layer. Thus, if the current layer being processed by GPU 135 of FIG. 1 is layer n, processor 110 of FIG. 1 may store gradients from layer n-1, may load weights and activations for layer n+1 (which may be described as preloading or prefetching data for the next layer), and may perform an optimizer status update for layer $n$-1. In this manner, computation may be overlapped with communication, improving efficiency: processor 110 of FIG. 1 may manage communication while GPU 135 of FIG. 1 is performing computation.

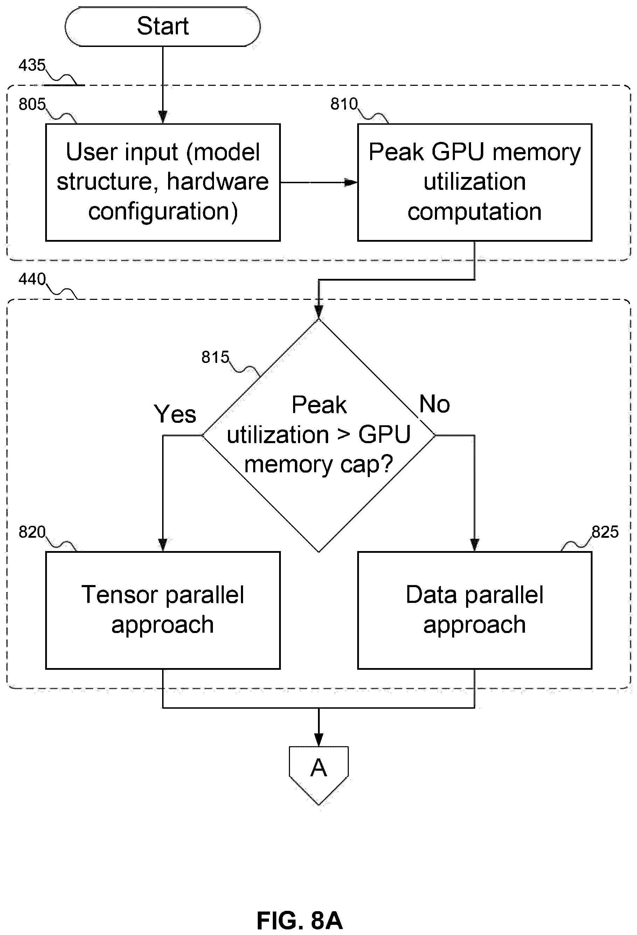

FIGs. 8A-8B show a flowchart of an example procedure for determining scheduling in heterogeneous computing system 305 of FIG. 3, according to embodiments of the disclosure. In FIG. 8A, at block 805, simulator 435 may receive user input, such as the model structure and the hardware configuration of heterogeneous computing system 305 of FIG. 3. At block 810, simulator 435 may compute the peak GPU memory utilization for each local memory 140 of FIG. 1 in each processing element 135 of FIG. 1 in heterogeneous computing system 305 of FIG. 3. This peak GPU memory utilization may be determined for each processing element 135 of FIG. 1 individually (or, in embodiments of the disclosure where each processing element 135 of FIG. 1 within a given node 105 of FIG. 1 may be identical, for each node 105 of FIG. 1), and may reflect memory utilization by processing element 135 of FIG. 1 of local memory 140 of FIG. 1, memory 115 of FIG. 1, storage device 120 of FIG. 1, and/or memory pool 145 of FIG. 1.

At block 815, intra-node scheduler 440 may determine whether the peak memory utilization of each local memory 140 of FIG. 1 of each processing element 135 of FIG. 1 exceeds the GPU memory cap: that is, whether the peak memory utilization of each local memory 140 of FIG. 1 of each GPU of FIG. 1 exceeds the capacity of local memory 140 of FIG. 1. If the peak GPU memory utilization of any processing element 135 of FIG. 1 exceeds the capacity of local memory 140 of FIG. 1, then that processing element 135 of FIG. 1 may be assigned to use a tensor parallel approach at block 820; otherwise, that processing element 135 of FIG. 1 may be assigned to use a data parallel approach at block 825. A tensor parallel may be utilized where memory consumption might be an issue. A tensor parallel approach may partition the model weights into smaller chunks, which may lower the peak memory utilization. This selection of tensor parallel vs. data parallel on a per-processing element 135 of FIG. 1 basis may help improve the overall efficiency of heterogeneous computing system 305 of FIG. 3.

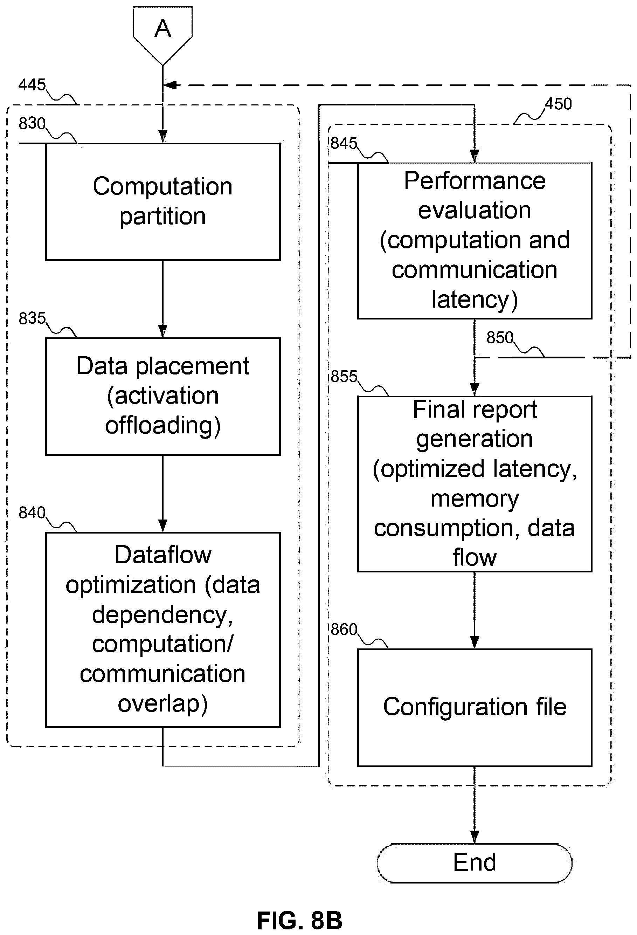

At block 830 (FIG. 8B), inter-node scheduler 445 may partition computations across nodes 105 of FIG. 1 of heterogeneous computing system 305 of FIG. 3. At block 835, inter-node scheduler 445 may perform data placement, including activation offloading to memory 115 of FIG. 1, storage device 120 of FIG. 1, and/or memory pool 145 of FIG. 1. At block 840, inter-node scheduler 445 may perform a dataflow optimization. This may include determining data dependencies and computation/communication overlaps, as described with reference to FIG. 7 above.

At block 845, evaluator 450 may determine a performance evaluation. This may involve calculating the computation and communication latencies in heterogeneous computing system 305 of FIG. 3. Based on this evaluation, feedback to inter-node scheduler 445 may be provided to attempt to improve the overall efficiency of heterogeneous computing system 305 of FIG. 3 by returning back to block 830 and making adjustments (large or small) to the computation partition and/or the data placement strategy, as shown by dashed arrow 850.

When the optimal scheduling for heterogeneous computing system 305 of FIG. 3 has been determined, at block 855, evaluator 450 may generate a final report. This final report may identify, for example, the optimized latency for inter-node communications, the memory consumption of each processing element 135, and the data flow between nodes 105 of FIG. 1 of heterogeneous computing system 305 of FIG. 3. Finally, at block 860, evaluator 450 may generate a configuration file, which may be used by a training framework. This configuration file would not replace the training framework entirely, but may be used as a substitute for any scheduling that might otherwise be determined by the training framework.

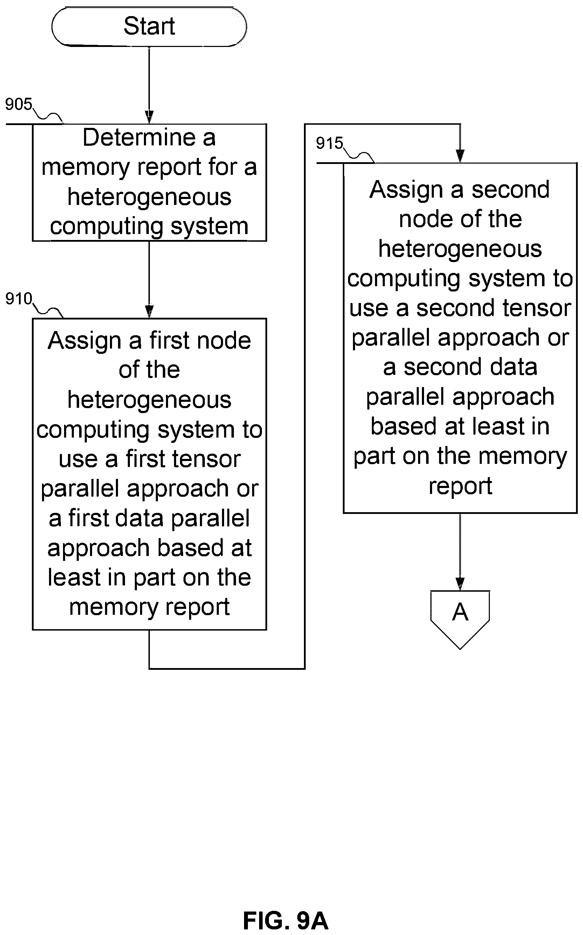

FIGs. 9A-9B show a flowchart of an example procedure for determining scheduling in heterogeneous computing system 305 of FIG. 3, according to embodiments of the disclosure. In FIG. 9A, at block 905, simulator 435 of FIG. 4 may determine a memory report for heterogeneous computing system 305 of FIG. 3. This memory report may be based on information about the model structure, the hardware of heterogeneous computing system 305 of FIG. 3-processors 110 of FIG. 1, memories 115 of FIG. 1, storage devices 120 of FIG. 1, local memories 140 of FIG. 1, memory pool 145, and bandwidth within and between nodes 105 of FIG. 1-and other information available to simulator 435 of FIG. 4. At block 910, intra-node scheduler 440 of FIG. 4 may assign one node 105 of FIG. 1 of heterogeneous computing system 305 of FIG. 3 to use either a tensor parallel approach or a data parallel approach based on the memory report, and at block 915, intra-node scheduler 440 of FIG. 4 may assign another node 105 of FIG. 1 of heterogeneous computing system 305 of FIG. 3 to use either a tensor parallel approach or a data parallel approach based on the memory report.

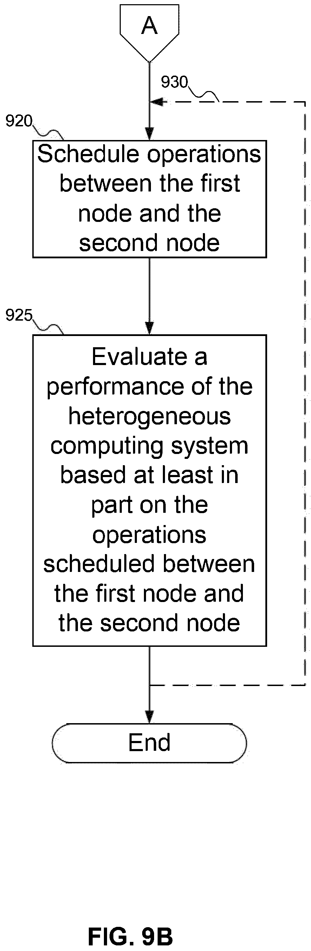

At block 920 (FIG. 9B), inter-node scheduler 445 of FIG. 4 may schedule operations between or among nodes 105 of FIG. 1 of heterogeneous computing system 305 of FIG. 3. Finally, at block 925, evaluator 450 of FIG. 4 may evaluate the performance of heterogeneous computing system 305 of FIG. 3 based on how operations are scheduled between nodes 105 of FIG. 1 of heterogeneous computing system 305 of FIG. 3. In some situations, the evaluation of the performance may result in feedback to inter-node scheduler 445, and control may return to block 920 to adjust the schedule of operations between or among nodes 105 of FIG. 1 of heterogeneous computing system 305 of FIG. 3, as shown by dashed arrow 930.

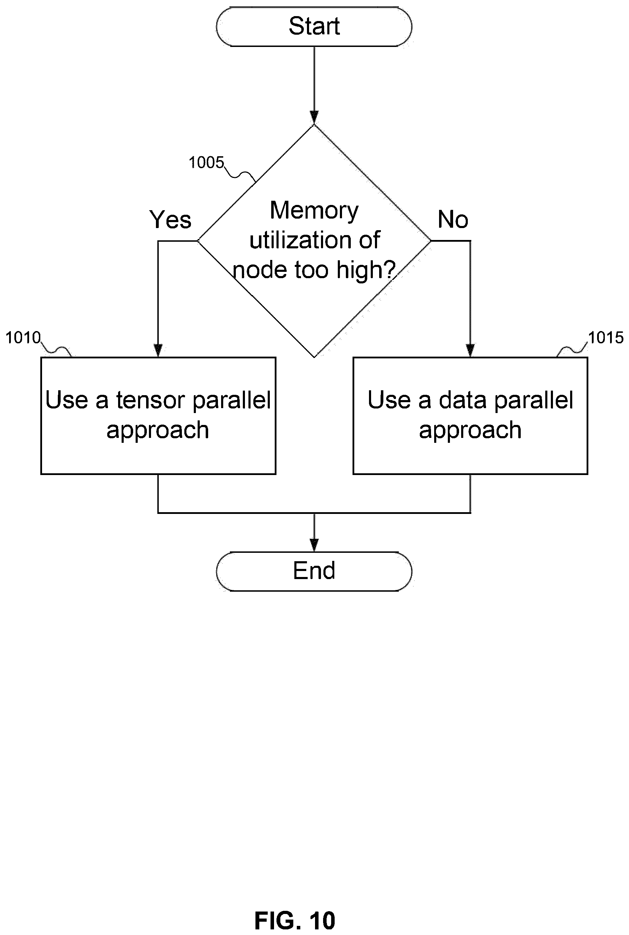

FIG. 10 shows a flowchart of an example procedure for machine 405 of FIG. 4 to determine whether individual nodes 105 of FIG. 1 in heterogeneous computing system 305 of FIG. 3 should use a tensor parallel approach or a data parallel approach, according to embodiments of the disclosure. In FIG. 10, at block 1005, intra-node scheduler 440 of FIG. 4 may examine the memory utilization as determined by simulator 435 of FIG. 4 in block 905 of FIG. 9. This memory utilization may be compared, for example, with the capacities of local memory 140 and memory 115 of FIG. 1. While the sum of the capacities of local memory 140 and memory 115 of FIG. 1 might be used, since memory 115 of FIG. 1 may be shared across all processing elements 135 of FIG. 1 (with their individual local memories 140 of FIG. 1), a comparison of the memory utilization of an individual processing element 135 of FIG. 1 with the sum of the capacities of its local memory 140 and memory 115 of FIG. 1 might overestimate the available memory, and therefore other functions of local memory 140 and memory 115 of FIG. 1 may also be used. If the memory utilization in the memory report exceeds the available memory capacity (and therefore is too high), at block 1010, that processing element 135 of FIG. 1 may be assigned to use a tensor parallel approach; otherwise, at block 1015, that processing element 135 of FIG. 1 may be assigned to use a data parallel approach. Note that if all processing elements 135 of FIG. 1 within a given node 105 of FIG. 1 are equivalent, then this decision process may be performed once for all processing elements 135 of FIG. 1 within a given node 105 of FIG. 1.

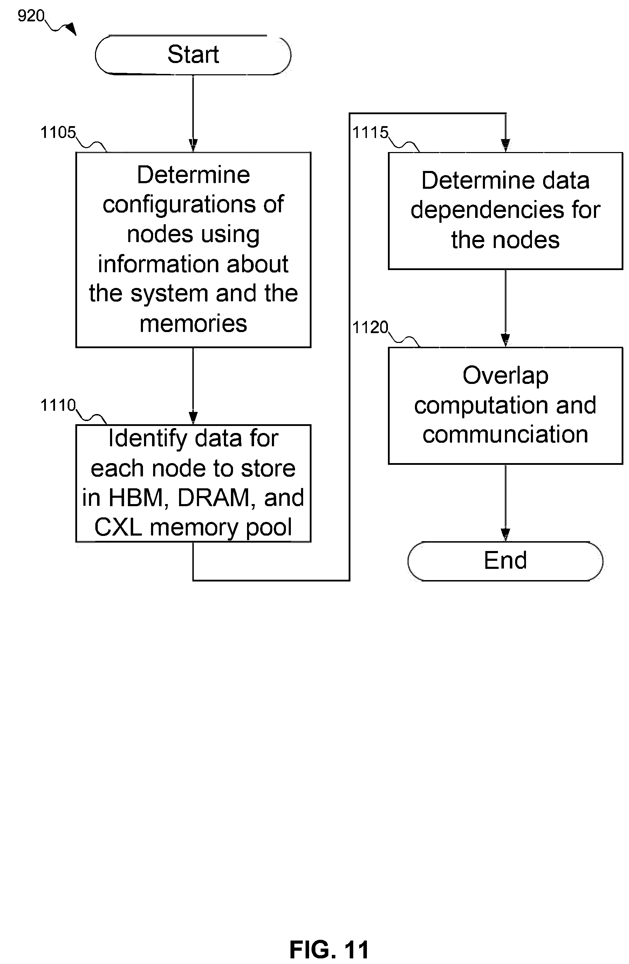

FIG. 11 shows a flowchart of an example procedure for scheduling inter-node computation and communication in heterogeneous computing system 305 of FIG. 3, according to embodiments of the disclosure. In FIG. 11, at block 1105, inter-node scheduler 445 of FIG. 4 may determine the configurations of nodes 105 of FIG. 1 (such as their respectively processing and memory capabilities, as well as which nodes 105 of FIG. 1/processing elements 135 of FIG. 1 are assigned a tensor parallel approach vs. a data parallel approach). This operation may involve, for example, determining how many batches are assigned to each processing element 135 of FIG. 1. At block 1110, inter-node scheduler 445 of FIG. 4 may identify data to be stored in various locations, such as local memories 140 of FIG. 1, memories 115 of FIG. 1, memory pool 140, and/or storage devices 120 of FIG. 1 for nodes 105 of FIG. 1. At block 1115, inter-node scheduler 445 of FIG. 4 may determine data dependencies for data in nodes 105 of FIG. 1. Finally, at block 1120, inter-node scheduler 445 of FIG. 4 may attempt to overlap computation within nodes 105 and communication within and between nodes 105 of FIG. 1, to improve efficiency.

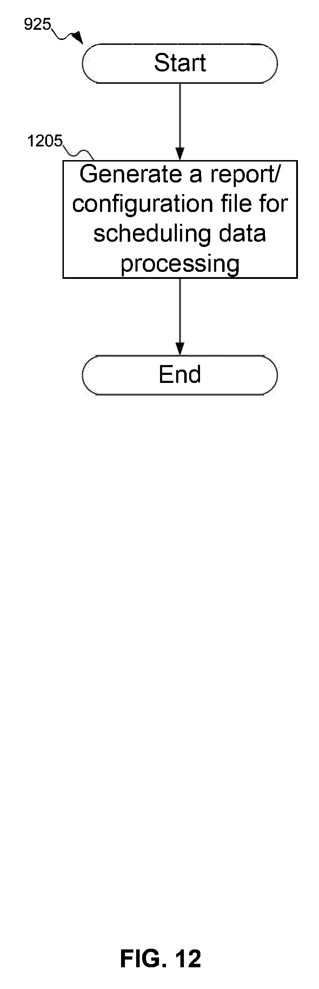

FIG. 12 shows a flowchart of an example procedure for generating a report or configuration file describing scheduling in heterogeneous computing system 305 of FIG. 3, according to embodiments of the disclosure. In FIG. 12, at block 1205, evaluator 450 of FIG. 4 may generate a report regarding the performance of heterogeneous computing system 305 of FIG. 3. This report may include information that may be used by inter-node scheduler 445 of FIG. 4 in adjusting the scheduling of operations between nodes 105 of FIG. 1 in heterogeneous computing system 305 of FIG. 3, to further increase efficiency in heterogeneous computing system 305 of FIG. 3 (as shown by dashed arrow 930 of FIG. 9). Alternatively, this information may include a configuration file, which may be used by a framework to perform the training of the LLM in the heterogeneous computing system 305 of FIG. 3.

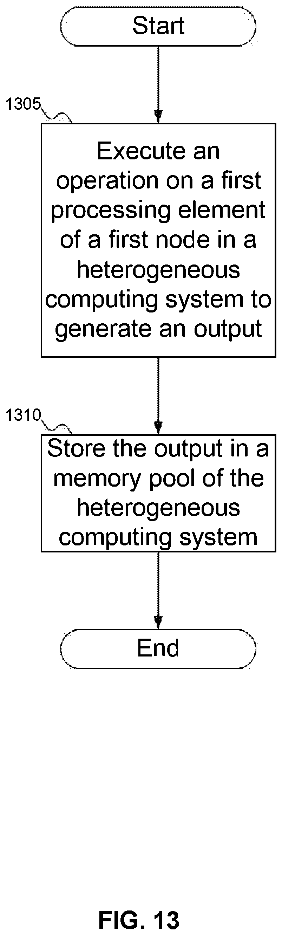

FIG. 13 shows a flowchart of an example procedure for using memory pool 145 of FIG. 1 to exchange data in heterogeneous computing system 305 of FIG. 3, according to embodiments of the disclosure. In FIG. 13, at block 1305, processing element 135 of FIG. 1 in node 105 of FIG. 1 may execute an operation, which may produce an output. This operation may be any operation used in performing training of an LLM, such as matrix multiplication, accumulation and/or aggregation of values, activation of features, etc. At block 1310, this output may be stored in memory pool 145 of FIG. 1. By storing the output in memory pool 145 of FIG. 1, another processing element 135 of FIG. 1 in another node 105 of FIG. 1 (or even the same node 105 of FIG. 1) may retrieve the data from memory pool 145 of FIG. 1, avoiding the need use less efficient data transfer approaches, such as RDMA, to exchange data between processing elements 135 of FIG. 1.

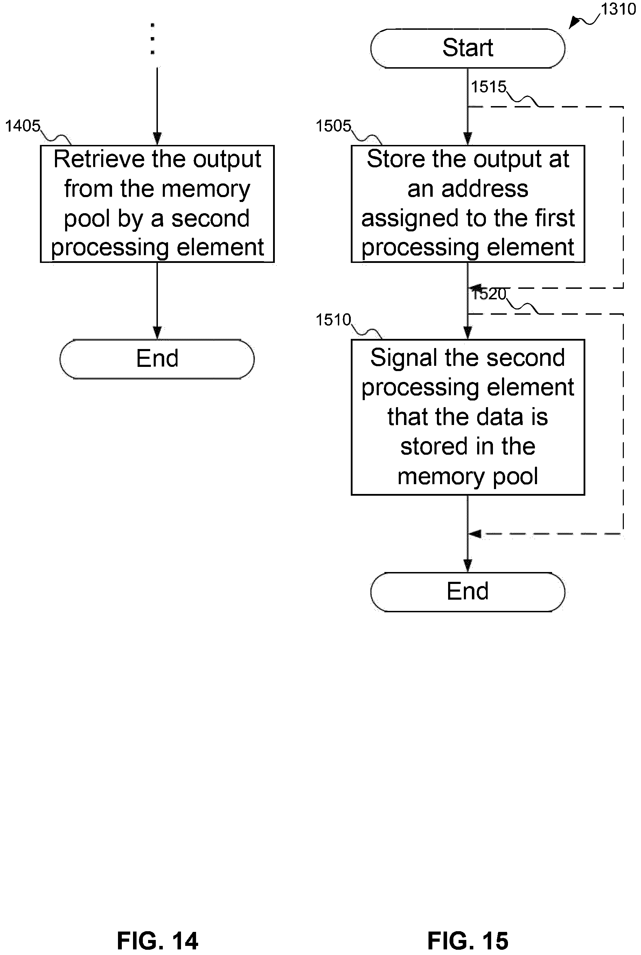

FIG. 14 expands on the flowchart of FIG. 13 of an example procedure for exchanging data in heterogeneous computing system 305 of FIG. 3, according to embodiments of the disclosure. In FIG. 14, processing element 135 of FIG. 1 of node 105 of FIG. 1 may then load the data from memory pool 145 of FIG. 1 that was stored there by processing element 135 of FIG. 1 in block 1310 of FIG. 13.

FIG. 15 shows a flowchart of an example procedure for one node 105 of FIG. 1 in heterogeneous computing system 305 of FIG. 3 to inform another node 105 of FIG. 1 that data is ready to be retrieved by the other node, according to embodiments of the disclosure. In FIG. 15, at block 1505, source processing element 135 of FIG. 1 may store its output at a memory address assigned to the source processing element 135 of FIG. 1 (and therefore which the destination processing element 135 of FIG. 1 may load the data from as well). Alternatively, at block 1510, source processing element 135 of FIG. 1 may signal destination processing element 135 of FIG. 1 that the data is stored in memory pool 145 of FIG. 1. This signal may include, for example, the address at which the data is stored in memory pool 145 of FIG. 1. As shown by dashed arrows 1515 and 1520, blocks 1505 and 1510 may be skipped respectively, depending on the implementation of heterogeneous computing system 305 of FIG. 3.

In FIGs. 9A-15, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may enable training a large language model using a heterogeneous computing system. Since a heterogeneous computing system may include hardware with different capacities, assuming that the computing system is homogeneous (as current frameworks do) might result in a lower efficiency for the heterogeneous computing system. By scheduling operations within and between nodes that factors in the varying capabilities of nodes and other equipment within the heterogeneous computing system, the performance of the heterogeneous computing system may be improved, offering a technical advantage over frameworks that assume a homogeneous computing system.

Technologies that enable inter-node communication usually use remote direct memory access (RDMA). However, the bandwidth of RDMA may be limited.

In some embodiments of the disclosure, using RDMA for data communication may involve a central processing unit (CPU). In some embodiments of the disclosure, a graphics processing unit (GPU) may copy local data back to the CPU. In some embodiments of the disclosure, the data path of inter-node communication may be longer than using a Compute Express Link (CXL) memory pool as a mechanism for exchanging data between nodes.

In some embodiments of the disclosure, if training a large language model (LLM) is performed on heterogeneous GPU clusters, the workload may be partitioned unevenly to different GPU nodes. In some embodiments of the disclosure, this may cause imbalanced communication for weights and gradient synchronization among different GPU nodes, such as imbalanced communication in weights "all-gather" and gradients "reduce-scatter."

In some embodiments of the disclosure, the LLM weights may be offloaded to CXL memory pool devices instead of storing them inside the GPU local high bandwidth memory (HBM). In some embodiments of the disclosure, part of the activations may be offloaded to the CXL memory pool. In some embodiments of the disclosure, the peak GPU memory utilization may be reduced.

In some embodiments of the disclosure, RDMA for communication among different GPU nodes in a cluster may not be needed. In some embodiments of the disclosure, the GPU may read/write data from/to CXL memory pool devices using load/store instructions. In some embodiments of the disclosure, low CPU utilization may allow the CPU to be available for other workloads.

In some embodiments of the disclosure, a technique to offload activations to CXL memory pool devices may include 4 parts.

In some embodiments of the disclosure, the first part may be user input. In some embodiments of the disclosure, the user inputs may include LLM model structure, training strategy (parallelism, offloading) and hardware system configurations. In some embodiments of the disclosure, the user inputs may be defined in a JavaScript Object Notation (JSON) file and used as the input to the invention system.

In some embodiments of the disclosure, the second part may be input analysis. In some embodiments of the disclosure, symbolic traces may be generated based on the LLM model structure and a directed acyclic graph (DAG) may be built for dataflow. In some embodiments of the disclosure, the data dependencies may be analyzed between different operators. In some embodiments of the disclosure, the memory, computation capability and internal memory bandwidth of each node may be analyzed.

In some embodiments of the disclosure, the third part may be design space exploration. In some embodiments of the disclosure, with the user design target and run-time constraints, the workload to different GPU nodes may be partitioned and the data among GPU HBM and CXL memory pool devices may be orchestrated. In some embodiments of the disclosure, a performance report may be created including the latency breakdown, the peak memory usage from the simulator. In some embodiments of the disclosure, this part may go for several iterations until an optimal design point may be found.

In some embodiments of the disclosure, the fourth part may be training guideline generation. In some embodiments of the disclosure, an optimal performance estimation may be generated including the latency, memory consumption and cost. In some embodiments of the disclosure, an optimized dataflow with training strategy suggestions and guidelines may be generated.

In some embodiments of the disclosure, a hardware-aware scheduling and data orchestration for balanced LLM training on heterogeneous GPU clusters may be used. In some embodiments of the disclosure, a hardware memory-aware parameter offloading mechanism to utilize a high-performance GPU local HBM may be used. In some embodiments of the disclosure, a hardware computing capability aware workload partitioning and scheduling algorithm to achieve a balanced computation among different GPU cluster nodes for higher training throughput and lower latency may be used.

In some embodiments of the disclosure, a hardware-aware workload partitioning and scheduling algorithm solution for optimized and efficient LLM training on heterogenous GPU clusters may be used.

In some embodiments of the disclosure, activation may be offloaded to external CXL memory. In some embodiments of the disclosure, activation may also be offloaded to any other types of memory.

In some embodiments of the disclosure, a server cluster may have N GPU nodes. In some embodiments of the disclosure, the GPUs under the same node may be homogeneous. In some embodiments of the disclosure, different nodes may be equipped with a different number and type of GPUs.

In some embodiments of the disclosure, a node may be equipped with $\{n_1, n_2, \dots, n_N\}$ GPUs, with computation capability $\{c_1, c_2, \dots, c_N\}$ FLOPs, local memory capacity $\{m_1, m_2, \dots, m_N\}$, and local memory bandwidth $\{b_1, b_2, \dots, b_N\}$. In some embodiments of the disclosure, the memory pool bandwidth may be $b_{mem}$. In some embodiments of the disclosure, the total computation capability and local memory capacity of each GPU node may be calculated as $\{c_1 n_1, c_2 n_2, \dots, c_N n_N\}$ FLOPs and $\{m_1 n_1, m_2 n_2, \dots, m_N n_N\}$. In some embodiments of the disclosure, assume that an LLM has L transformer layers, the size of the weights of each transformer layer may be 2s (in float16). In some embodiments of the disclosure, with batch size *B,* the per layer activation size of each batch may be 2*a* (in float16).

In some embodiments of the disclosure, there may be different parallelism hierarchies. In some embodiments of the disclosure, for intra-node, tensor parallel or data parallel may be used. In some embodiments of the disclosure, for inter-node, data parallel may be used. In some embodiments of the disclosure, for example, if the GPU memory capacity of a node is small (may not accommodate the parameter needed for a single layer), tensor parallel inside one node may be used. In some embodiments of the disclosure, if the GPU memory capacity of a node is large (may accommodate the parameter needed for a single layer), data parallel inside one node may be used.

In some embodiments of the disclosure, considering the computation capability of each GPU node, a GPU node may be assigned $\{b_1, b_2, \dots, b_N\}$ micro-batches. In some embodiments of the disclosure, those parameters may be solved by the scheduling algorithm. In some embodiments of the disclosure, micro-batches may not be assigned to each GPU node based on the computation capability because the communication time may be taken into consideration.

In some embodiments of the disclosure, a GPU may partially offload the activations/checkpoints to a CXL memory pool or other types of external memory for a reduced amount of communication and better utilization of the GPU local HBM. In some embodiments of the disclosure, the activation/checkpoint offloading ratio may be decided by the scheduling algorithm.

In some embodiments of the disclosure, during the training backward of each layer, the detailed breakdown of each GPU local HBM usage under different nodes may be summarized as follows:

Tensor parallel: Weights: $\left\{\frac{2s}{n_1}, \frac{2s}{n_2}, \dots, \frac{2s}{n_N}\right\}$ Activation: $\{2ab_1, 2ab_2, \dots, 2ab_N\}$ Gradients: $\left\{\frac{2s}{n_1}, \frac{2s}{n_2}, \dots, \frac{2s}{n_N}\right\}$

Data parallel: Weights: $\{2s, 2s, \dots, 2s\}$ Activation: $\left\{2a\frac{b_1}{n_1}, 2a\frac{b_2}{n_2}, \dots, 2a\frac{b_N}{n_N}\right\}$ Gradients: $\{2s, 2s, \dots, 2s\}$

Activation offloading ratio: $\{\alpha_1, \alpha_2, \dots, \alpha_N\}$

In some embodiments of the disclosure, the peak memory utilization may be calculated by two times of the Weights + Activation + Gradients of a single layer + Non-offloaded full activation.

In some embodiments of the disclosure, the peak memory utilization of each GPU may be calculated as follows:

Tensor parallel:

$$\left\{\frac{8s}{n_1} + 4ab_1 + 2(1-\alpha_1)ab_1 L, \frac{8s}{n_2} + 4ab_2 + 2(1-\alpha_2)ab_2 L, \dots, \frac{8s}{n_N} + 4ab_N + 2(1-\alpha_N)ab_N L\right\}$$

Data parallel:

$$\left\{8s + 4a\frac{b_1}{n_1} + 2(1-\alpha_1)a\frac{b_1}{n_1}L, 8s + 4a\frac{b_2}{n_2} + 2(1-\alpha_2)a\frac{b_2}{n_2}L, \dots, 8s + \right.$$

$$\left. 4a\frac{b_N}{n_N} + 2(1-\alpha_N)a\frac{b_N}{n_N}L\right\}$$

In some embodiments of the disclosure, the execution time of each layer may be calculated as follows:

Assume the computation time of each layer is: $\{t_1, t_2, ... , t_N\}$
Assume the communication time of each layer is: $\{d_1, d_2, ..., d_N\}$

$$d_i = \frac{4s + 2(1 - \alpha_i)ab_i}{b_{mem}}$$

The execution time may be calculated as: $\max(t_i, d_i)$

In some embodiments of the disclosure, the optimization problem may be solved as follows:
To avoid out of memory: The peak memory utilization of each GPU node is smaller than the maximum local HBM capacity.

Load balancing: $dev(\{\max(t_1, d_1), \max(t_2, d_2), ... , \max(t_N, d_N)\})$ is minimal.

Smallest latency: $\max(\{\max(t_1, d_1), \max(t_2, d_2), ... , \max(t_N, d_N)\})$ is minimal.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth®, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:

Statement 1. An embodiment of the inventive concept includes a scheduling system, comprising:

a simulator to process an information regarding a heterogeneous computing system and to generate a first output;
an intra-node scheduler to schedule operations within a first node and within a second node based on the first output of the simulator and to generate a second output;
an inter-node scheduler to schedule operations between the first node and the second node based on the second output and to generate a third output; and
an evaluator to evaluate a performance of the heterogeneous computing system based on the third output, wherein the heterogeneous computing system includes:

the first node, wherein the first node includes a first processing element including a first local memory; and
the second node, wherein the second node includes a second processing element including a second local memory,

wherein the first node includes a first capability, and
wherein the second nodes includes a second capability, the second capability different from the first capability.

Statement 2. An embodiment of the disclosure includes the scheduling system according to statement 1, wherein:

the first capability includes a first memory capability of the first local memory, a first computation capability of the first processing element, or a first bandwidth of the first node; and
the second capability includes a second memory capability of the second local memory, a second computation capability of the second processing element, or a second bandwidth of the second node.

Statement 3. An embodiment of the disclosure includes the scheduling system according to statement 1, wherein:

the first node further includes:

a first processor; and
a first memory coupled to the first processor;

the second node further includes:

a second processor; and
a second memory coupled to the second processor;

the first processing element is coupled to the first processor; and
the second processing element is coupled to the second processor.

Statement 4. An embodiment of the disclosure includes the scheduling system according to statement 3, wherein:

the first capability includes a first memory capability of the first local memory, a first computation capability of the first processing element, a second memory capability of the first memory, a second computation capability of the first processor, or a first bandwidth of the first node; and
the second capability includes a third memory capability of the second local memory, a third computation capability of the second processing element, a fourth memory capability of the second memory, a fourth computation capability of the second processor, or a second bandwidth of the second node.

Statement 5. An embodiment of the disclosure includes the scheduling system according to statement 3, wherein the information regarding the heterogeneous computing system is at least one of a model structure, a first number of layers, a second number of hidden dimensions, an input data dimension, a first capacity of the first local memory, a second capacity of the second local memory, a third capacity of the first memory, a fourth capacity of the second memory, a first computational capability of the first processor, a second computational capability of the first processing element, a third computational capability of the second processor, a fourth computational capability of the second processing element, a first bandwidth between the first processing element and a third processing element of the first node, a second bandwidth between the second processing element and a fourth processing element of the second node, and a third bandwidth between the first node and the second node.

Statement 6. An embodiment of the disclosure includes the scheduling system according to statement 3, wherein the first output includes at least one of a latency for the heterogeneous computing system, a first memory consumption for the first memory, a second memory consumption for the second memory, a third memory consumption for the first local memory, a fourth memory consumption for the second local memory, or a fifth memory consumption for a memory pool.

Statement 7. An embodiment of the disclosure includes the scheduling system according to statement 3, wherein:

the second output includes a first information for the first node and a second information for the second node; and the intra-node scheduler is configured to generate the first information for the first node based at least in part on the first memory, the first capability, and the first local memory, and to generate the second information for the second node based at least in part on the second memory, the second capability, and the second local memory.

Statement 8. An embodiment of the disclosure includes the scheduling system according to statement 7, wherein the intra-node scheduler is configured to generate the first information based at least in part on a first comparison of a first memory report of the first output with a first capacity of the first memory and the first local memory, and to generate the second information based at least in part on a second comparison of a second memory report of the first output with a second capacity of the second memory and the second local memory.

Statement 9. An embodiment of the disclosure includes the scheduling system according to statement 3, wherein:

the third output includes a first configuration for the first node and a second configuration for the second node; and the inter-node scheduler is configured to generate the first configuration for the first node based at least in part on the information regarding the heterogeneous computing system, the first memory, the first local memory, and a memory pool, and to generate the second configuration for the second node based at least in part on the information regarding the heterogeneous computing system, the second memory, the second local memory, and the memory pool.

Statement 10. An embodiment of the disclosure includes the scheduling system according to statement 3, wherein the third output identifies a first data to store in the first local memory, a second data to store in the first memory, a third data to store in a memory pool, a fourth data to store the second local memory, a fifth data to store in the second memory, and a sixth data to store in the memory pool.

Statement 11. An embodiment of the disclosure includes the scheduling system according to statement 3, wherein the inter-node scheduler is configured to generate the third output based at least in part on a first overlap of computation by the first processor and the first processing element, a first communication including at least some of the first processor, the first processing element, the first memory, the first local memory, and a memory pool, a second overlap of computation by the second processor and the second processing element, and a second communication including at least some of the second processor, the second processing element, the second memory, the second local memory, and the memory pool.

Statement 12. An embodiment of the inventive concept includes the scheduling system according to statement 1, wherein:

the first processing element is selected from a set including a first Central Processing Unit (CPU), a first Graphics Processing Unit (GPU), a first System on a Chip (SoC), a first Field Programmable Gate Array (FPGA), a first Application-Specific Integrated Circuit (ASIC), a first Neural Processing Unit (NPU), a first Tensor Processing Unit (TPU), or a first accelerator; and the second processing element is selected from a set including a second CPU, a second GPU, a second SoC, a second FPGA, a second ASIC, a second NPU, a second TPU, or a second accelerator.

Statement 13. An embodiment of the inventive concept includes the scheduling system according to statement 1, wherein:

**EP 4 693 042 A1**

the first local memory is selected from a set including a first Dynamic Random Access Memory (DRAM), a first Static Random Access Memory (SRAM), or a first High Bandwidth Memory (HBM); and

the second local memory is selected from a set including a second DRAM, a second SRAM, or a second HBM.

Statement 14. An embodiment of the inventive concept includes the scheduling system according to statement 1, wherein the heterogeneous computing system further includes a memory pool, accessible to the first processing element using a first access request and accessible to the second processing element using a second access request.

Statement 15. An embodiment of the disclosure includes the scheduling system according to statement 14, wherein the memory pool includes a cache-coherent interconnect memory pool.

Statement 16. An embodiment of the disclosure includes the scheduling system according to statement 15, wherein the cache-coherent interconnect memory pool includes a Compute Express Link (CXL) memory pool.

Statement 17. An embodiment of the disclosure includes the scheduling system according to statement 14, further comprising a switch connected to the first node, the second node, and the memory pool.

Statement 18. An embodiment of the disclosure includes the scheduling system according to statement 17, wherein the switch includes a cache-coherent interconnect switch.

Statement 19. An embodiment of the disclosure includes the scheduling system according to statement 18, wherein the cache-coherent interconnect switch includes a Compute Express Link (CXL) switch.

Statement 20. An embodiment of the disclosure includes the scheduling system according to statement 1, wherein:

the simulator is configured to generate the first output based on the information regarding the heterogeneous computing system;

the intra-node scheduler is configured to generate the second output based on the first output;

the inter-node scheduler is configured to generate the third output based on the second output; and

the evaluator is configured to generate a fourth output based on the third output.

Statement 21. An embodiment of the disclosure includes the scheduling system according to statement 20, wherein the intra-node scheduler and the evaluator are configured to operate iteratively based on the second output, the third output, and the fourth output.

Statement 22. An embodiment of the disclosure includes the scheduling system according to statement 20, wherein the fourth output includes a report.

Statement 23. An embodiment of the disclosure includes the scheduling system according to statement 22, wherein the report includes a configuration file for use with a training framework.

Statement 24. An embodiment of the disclosure includes the scheduling system according to statement 23, wherein the training framework is configured to use the configuration report in scheduling training in the heterogeneous computing system.

Statement 25. An embodiment of the disclosure includes the scheduling system according to statement 1, wherein the information regarding the heterogeneous computing system is at least one of a model structure, a first number of layers, a second number of hidden dimensions, an input data dimension, a first capacity of the first local memory, a second capacity of the second local memory, a first computational capability of the first processing element, a second computational capability of the second processing element, a first bandwidth between the first processing element and a third processing element of the first node, a second bandwidth between the second processing element and a fourth processing element of the second node, and a third bandwidth between the first node and the second node.

Statement 26. An embodiment of the disclosure includes the scheduling system according to statement 1, wherein the first output includes a first memory report for the first node and a second memory report for the second node.

Statement 27. An embodiment of the disclosure includes the scheduling system according to statement 1, wherein the first output includes at least one of a latency for the heterogeneous computing system, a first memory consumption for the first local memory, a second memory consumption for the second local memory, or a third memory consumption for a memory pool.

Statement 28. An embodiment of the disclosure includes the scheduling system according to statement 1, wherein:

the second output includes a first information for the first node and a second information for the second node; and

the intra-node scheduler is configured to generate the first information for the first node based at least in part on the first capability, and the first local memory, and to generate the second information for the second node based at least in part on the second capability, and the second local memory.

Statement 29. An embodiment of the disclosure includes the scheduling system according to statement 28, wherein:

the first information indicates whether the first node should use a first tensor parallel approach or a first data parallel approach; and
the second information indicates whether the second node should use a second tensor parallel approach or a second data parallel approach.

Statement 30. An embodiment of the disclosure includes the scheduling system according to statement 28, wherein the intra-node scheduler is configured to generate the first information based at least in part on a first comparison of a first memory report of the first output with a first capacity of the first memory and the first local memory, and to generate the second information based at least in part on a second comparison of a second memory report of the first output with a second capacity of the second memory and the second local memory.

Statement 31. An embodiment of the disclosure includes the scheduling system according to statement 1, wherein:

the third output includes a first configuration for the first node and a second configuration for the second node; and
the inter-node scheduler is configured to generate the first configuration for the first node based at least in part on the information regarding the heterogeneous computing system, the first memory, the first local memory, and a memory pool, and to generate the second configuration for the second node based at least in part on the information regarding the heterogeneous computing system, the second memory, the second local memory, and the memory pool.

Statement 32. An embodiment of the disclosure includes the scheduling system according to statement 1, wherein the third output identifies a first data to store in the first local memory, a second data to store in the first memory, a third data to store in a memory pool, a fourth data to store the second local memory, a fifth data to store in the second memory, and a sixth data to store in the memory pool.

Statement 33. An embodiment of the disclosure includes the scheduling system according to statement 1, wherein the inter-node scheduler is configured to generate the third output based at least in part on the first processing element, the first memory, the first local memory, and a memory pool, the second processing element, the second memory, the second local memory, and the memory pool.

Statement 34. An embodiment of the disclosure includes a method, comprising:

determining a memory report for a heterogeneous computing system;
assigning a first node of the heterogeneous computing system to use a first tensor parallel approach or a first data parallel approach based at least in part on the memory report;
assigning a second node of the heterogeneous computing system to use a second tensor parallel approach or a second data parallel approach based at least in part on the memory report;
scheduling operations between the first node and the second node; and
evaluating a performance of the heterogeneous computing system based at least in part on the operations scheduled between the first node and the second node,
wherein the heterogeneous computing system includes:

the first node, wherein the first node includes a first processing element including a first local memory; and
the second node, wherein the second node includes a second processing element including a second local memory,

wherein the first node includes a first capability, and
wherein the second nodes includes a second capability, the second capability different from the first capability.

Statement 35. An embodiment of the disclosure includes the method according to statement 34, wherein:

the first capability includes a first memory capability of the first local memory, a first computation capability of the first processing element, or a first bandwidth of the first node; and
the second capability includes a second memory capability of the second local memory, a second computation capability of the second processing element, or a second bandwidth of the second node.

Statement 36. An embodiment of the disclosure includes the method according to statement 34, wherein:

the first node further includes:

a first processor; and
a first memory coupled to the first processor;

the second node further includes:

> a second processor; and
> a second memory coupled to the second processor;

the first processing element is coupled to the first processor; and
the second processing element is coupled to the second processor.

Statement 37. An embodiment of the disclosure includes the method according to statement 36, wherein:

the first capability includes a first memory capability of the first local memory, a first computation capability of the first processing element, a second memory capability of the first memory, a second computation capability of the first processor, or a first bandwidth of the first node; and
the second capability includes a third memory capability of the second local memory, a third computation capability of the second processing element, a fourth memory capability of the second memory, a fourth computation capability of the second processor, or a second bandwidth of the second node.

Statement 38. An embodiment of the disclosure includes the method according to statement 36, wherein: determining the memory report for the heterogeneous computing system includes determining a training latency for the heterogeneous computing system based at least in part on an information regarding the heterogeneous computing system, the information regarding the heterogeneous computing system is at least one of a model structure, a first number of layers, a second number of hidden dimensions, an input data dimension, a first capacity of the first local memory, a second capacity of the second local memory, a third capacity of the first memory, a fourth capacity of the second memory, a first computational capability of the first processor, a second computational capability of the first processing element, a third computational capability of the second processor, a fourth computational capability of the second processing element, a first bandwidth between the first processing element and a third processing element of the first node, a second bandwidth between the second processing element and a fourth processing element of the second node, and a third bandwidth between the first node and the second node.

Statement 39. An embodiment of the disclosure includes the method according to statement 36, wherein the memory report includes a latency for the heterogeneous computing system, a first memory consumption for the first memory, a second memory consumption for the second memory, a third memory consumption for the first local memory, a fourth memory consumption for the second local memory, and a fifth memory consumption for a memory pool.

Statement 40. An embodiment of the disclosure includes the method according to statement 36, wherein:

assigning the first node of the heterogeneous computing system to use the first tensor parallel approach or the first data parallel approach based at least in part on the memory report includes assigning the first node of the heterogeneous computing system to use the first tensor parallel approach or the first data parallel approach based a comparison of the memory report with a first capacity of the first memory and the first local memory; and
assigning the second node of the heterogeneous computing system to use the second tensor parallel approach or the second data parallel approach based at least in part on the memory report includes assigning the second node of the heterogeneous computing system to use the second tensor parallel approach or the second data parallel approach based a comparison of the memory report with a second capacity of the second memory and the second local memory.

Statement 41. An embodiment of the disclosure includes the method according to statement 36, wherein scheduling operations between the first node and the second node includes:

determining a first configuration of the first node based at least in part on an information regarding the heterogeneous computing system, the first memory, the first local memory, and a memory pool; and
determining a second configuration of the second node based at least in part on an information regarding the heterogeneous computing system, the second memory, the second local memory, and the memory pool.

Statement 42. An embodiment of the disclosure includes the method according to statement 41, wherein:

determining a first configuration of the first node based at least in part on an information regarding the heterogeneous computing system, the first memory, the first local memory, and the memory pool includes identifying a first data to store in the first local memory, a second data to store in the first memory, and a third data to store in the memory pool; and

determining a second configuration of the second node based at least in part on an information regarding the heterogeneous computing system, the second memory, the second local memory, and the memory pool includes identifying a fourth data to store in the second local memory, a fifth data to store in the second memory, and a sixth data to store in the memory pool.

Statement 43. An embodiment of the disclosure includes the method according to statement 36, wherein scheduling operations between the first node and the second node includes:

overlapping a first computation by the first processor and the first processing element and a first communication including at least some of the first processor, the first processing element, the first memory, the first local memory, and a memory pool; and
overlapping a second computation by the second processor and the second processing element, and a second communication including at least some of the second processor, the second processing element, the second memory, the second local memory, and the memory pool.

Statement 44. An embodiment of the disclosure includes the method according to statement 43, wherein scheduling operations between the first node and the second node includes:

determining a first data dependency associated with the first node; and
determining a second data dependency associated with the second node.

Statement 45. An embodiment of the disclosure includes the method according to statement 44, wherein:

overlapping the first computation by the first processor and the first processing element and the first communication including at least some of the first processor, the first processing element, the first memory, the first local memory, and the memory pool includes overlapping the first computation by the first processor and the first processing element and the first communication including at least some of the first processor, the first processing element, the first memory, the first local memory, and the memory pool based at least in part on the first data dependency; and
overlapping the second computation by the second processor and the second processing element, and the second communication including at least some of the second processor, the second processing element, the second memory, the second local memory, and the memory pool includes overlapping the second computation by the second processor and the second processing element, and the second communication including at least some of the second processor, the second processing element, the second memory, the second local memory, and the memory pool based at least in part on the first data dependency.

Statement 46. An embodiment of the disclosure includes the method according to statement 34, wherein the heterogeneous computing system further includes a memory pool, accessible to the first processing element using a first access request and accessible to the second processing element using a second access request.

Statement 47. An embodiment of the disclosure includes the method according to statement 46, wherein the memory pool includes a cache-coherent interconnect memory pool.

Statement 48. An embodiment of the disclosure includes the method according to statement 47, wherein the cache-coherent interconnect memory pool includes a Compute Express Link (CXL) memory pool.

Statement 49. An embodiment of the disclosure includes the method according to statement 46, further comprising a switch connected to the first node, the second node, and the memory pool.

Statement 50. An embodiment of the disclosure includes the method according to statement 49, wherein the switch includes a cache-coherent interconnect switch.

Statement 51. An embodiment of the disclosure includes the method according to statement 50, wherein the cache-coherent interconnect switch includes a Compute Express Link (CXL) switch.

Statement 52. An embodiment of the disclosure includes the method according to statement 34, wherein determining the memory report for the heterogeneous computing system includes determining a training latency for the heterogeneous computing system based at least in part on an information regarding the heterogeneous computing system.

Statement 53. An embodiment of the disclosure includes the method according to statement 52, wherein the information regarding the heterogeneous computing system is at least one of a model structure, a first number of layers, a second number of hidden dimensions, an input data dimension, a first capacity of the first local memory, a second capacity of the second local memory, a first computational capability of the first processing element, a second computational capability of the second processing element, a first bandwidth between the first processing element and a third processing element of the first node, a second bandwidth between the second processing element and a fourth processing element of the second node, and a third bandwidth between the first node and the second node.

Statement 54. An embodiment of the disclosure includes the method according to statement 34, wherein the memory report includes a latency for the heterogeneous computing system, a first memory consumption for the first local memory, a second memory consumption for the second local memory, and a third memory consumption for a memory pool.

Statement 55. An embodiment of the disclosure includes the method according to statement 34, wherein scheduling operations between the first node and the second node and evaluating the performance of the heterogeneous computing system based at least in part on the operations scheduled between the first node and the second node operate iteratively to attempt to optimize the operation of the heterogeneous computing system.

Statement 56. An embodiment of the disclosure includes the method according to statement 55, wherein the training framework is configured to use the configuration report in scheduling training in the heterogeneous computing system.

Statement 57. An embodiment of the disclosure includes the method according to statement 34, wherein:

assigning the first node of the heterogeneous computing system to use the first tensor parallel approach or the first data parallel approach based at least in part on the memory report includes assigning the first node of the heterogeneous computing system to use the first tensor parallel approach or the first data parallel approach based a comparison of the memory report with a first capacity of the first local memory; and
assigning the second node of the heterogeneous computing system to use the second tensor parallel approach or the second data parallel approach based at least in part on the memory report includes assigning the second node of the heterogeneous computing system to use the second tensor parallel approach or the second data parallel approach based a comparison of the memory report with a second capacity of the second local memory.

Statement 58. An embodiment of the disclosure includes the method according to statement 34, wherein scheduling operations between the first node and the second node includes:

determining a first configuration of the first node based at least in part on an information regarding the heterogeneous computing system, the first local memory, and a memory pool; and
determining a second configuration of the second node based at least in part on an information regarding the heterogeneous computing system, the second local memory, and the memory pool.

Statement 59. An embodiment of the disclosure includes the method according to statement 58, wherein:

determining a first configuration of the first node based at least in part on an information regarding the heterogeneous computing system, the first local memory, and the memory pool includes identifying a first data to store in the first local memory and a second data to store in the memory pool; and
determining a second configuration of the second node based at least in part on an information regarding the heterogeneous computing system, the second local memory, and the memory pool includes identifying a third data to store in the second local memory and a fourth data to store in the memory pool.

Statement 60. An embodiment of the disclosure includes the method according to statement 34, further comprising generating a report based on the evaluation of the performance of the heterogeneous computing system.

Statement 61. An embodiment of the disclosure includes the method according to statement 60, wherein the report includes a configuration file for use with a training framework.

Statement 62. An embodiment of the disclosure includes a system, comprising a non-transitory storage medium, the non-transitory storage medium having stored thereon instructions that, when executed by a machine, result in:

determining a memory report for a heterogeneous computing system;
assigning a first node of the heterogeneous computing system to use a first tensor parallel approach or a first data parallel approach based at least in part on the memory report;
assigning a second node of the heterogeneous computing system to use a second tensor parallel approach or a second data parallel approach based at least in part on the memory report;
scheduling operations between the first node and the second node; and
evaluating a performance of the heterogeneous computing system based at least in part on the operations scheduled between the first node and the second node,
wherein the heterogeneous computing system includes:

the first node, wherein the first node includes a first processing element including a first local memory; and
the second node, wherein the second node includes a second processing element including a second local memory,

wherein the first node includes a first capability, and
wherein the second nodes includes a second capability, the second capability different from the first capability.

Statement 63. An embodiment of the disclosure includes the system according to statement 62, wherein:

the first capability includes a first memory capability of the first local memory, a first computation capability of the first processing element, or a first bandwidth of the first node; and
the second capability includes a second memory capability of the second local memory, a second computation capability of the second processing element, or a second bandwidth of the second node.

Statement 64. An embodiment of the disclosure includes the system according to statement 62, wherein:

the first node further includes:

a first processor; and
a first memory coupled to the first processor;

the second node further includes:

a second processor; and
a second memory coupled to the second processor;

the first processing element is coupled to the first processor; and
the second processing element is coupled to the second processor.

Statement 65. An embodiment of the disclosure includes the system according to statement 64, wherein:

the first capability includes a first memory capability of the first local memory, a first computation capability of the first processing element, a second memory capability of the first memory, a second computation capability of the first processor, or a first bandwidth of the first node; and
the second capability includes a third memory capability of the second local memory, a third computation capability of the second processing element, a fourth memory capability of the second memory, a fourth computation capability of the second processor, or a second bandwidth of the second node.

Statement 66. An embodiment of the disclosure includes the system according to statement 64, wherein determining the memory report for the heterogeneous computing system includes determining a training latency for the heterogeneous computing system based at least in part on an information regarding the heterogeneous computing system, the information regarding the heterogeneous computing system is at least one of a model structure, a first number of layers, a second number of hidden dimensions, an input data dimension, a first capacity of the first local memory, a second capacity of the second local memory, a third capacity of the first memory, a fourth capacity of the second memory, a first computational capability of the first processor, a second computational capability of the first processing element, a third computational capability of the second processor, a fourth computational capability of the second processing element, a first bandwidth between the first processing element and a third processing element of the first node, a second bandwidth between the second processing element and a fourth processing element of the second node, and a third bandwidth between the first node and the second node.

Statement 67. An embodiment of the disclosure includes the system according to statement 64, wherein the memory report includes a latency for the heterogeneous computing system, a first memory consumption for the first memory, a second memory consumption for the second memory, a third memory consumption for the first local memory, a fourth memory consumption for the second local memory, and a fifth memory consumption for a memory pool.

Statement 68. An embodiment of the disclosure includes the system according to statement 64, wherein:

assigning the first node of the heterogeneous computing system to use the first tensor parallel approach or the first data parallel approach based at least in part on the memory report includes assigning the first node of the heterogeneous computing system to use the first tensor parallel approach or the first data parallel approach based a comparison of the memory report with a first capacity of the first memory and the first local memory; and
assigning the second node of the heterogeneous computing system to use the second tensor parallel approach or the second data parallel approach based at least in part on the memory report includes assigning the second node of the heterogeneous computing system to use the second tensor parallel approach or the second data parallel approach based a comparison of the memory report with a second capacity of the second memory and the second local memory.

Statement 69. An embodiment of the disclosure includes the system according to statement 64, wherein scheduling operations between the first node and the second node includes:

determining a first configuration of the first node based at least in part on an information regarding the heterogeneous computing system, the first memory, the first local memory, and a memory pool; and
determining a second configuration of the second node based at least in part on an information regarding the heterogeneous computing system, the second memory, the second local memory, and the memory pool.

Statement 70. An embodiment of the disclosure includes the system according to statement 69, wherein:

determining a first configuration of the first node based at least in part on an information regarding the heterogeneous computing system, the first memory, the first local memory, and the memory pool includes identifying a first data to store in the first local memory, a second data to store in the first memory, and a third data to store in the memory pool; and
determining a second configuration of the second node based at least in part on an information regarding the heterogeneous computing system, the second memory, the second local memory, and the memory pool includes identifying a fourth data to store in the second local memory, a fifth data to store in the second memory, and a sixth data to store in the memory pool.

Statement 71. An embodiment of the disclosure includes the system according to statement 62, wherein scheduling operations between the first node and the second node includes:

overlapping a first computation by the first processor and the first processing element and a first communication including at least some of the first processor, the first processing element, the first memory, the first local memory, and a memory pool; and
overlapping a second computation by the second processor and the second processing element, and a second communication including at least some of the second processor, the second processing element, the second memory, the second local memory, and the memory pool.

Statement 72. An embodiment of the disclosure includes the system according to statement 71, wherein scheduling operations between the first node and the second node includes:

determining a first data dependency associated with the first node; and
determining a second data dependency associated with the second node.

Statement 73. An embodiment of the disclosure includes the system according to statement 72, wherein:

overlapping the first computation by the first processor and the first processing element and the first communication including at least some of the first processor, the first processing element, the first memory, the first local memory, and the memory pool includes overlapping the first computation by the first processor and the first processing element and the first communication including at least some of the first processor, the first processing element, the first memory, the first local memory, and the memory pool based at least in part on the first data dependency; and
overlapping the second computation by the second processor and the second processing element, and the second communication including at least some of the second processor, the second processing element, the second memory, the second local memory, and the memory pool includes overlapping the second computation by the second processor and the second processing element, and the second communication including at least some of the second processor, the second processing element, the second memory, the second local memory, and the memory pool based at least in part on the first data dependency.

Statement 74. An embodiment of the disclosure includes the system according to statement 62, wherein the heterogeneous computing system further includes a memory pool, accessible to the first processing element using a first access request and accessible to the second processing element using a second access request.

Statement 75. An embodiment of the disclosure includes the system according to statement 74, wherein the memory pool includes a cache-coherent interconnect memory pool.

Statement 76. An embodiment of the disclosure includes the system according to statement 75, wherein the cache-coherent interconnect memory pool includes a Compute Express Link (CXL) memory pool.

Statement 77. An embodiment of the disclosure includes the system according to statement 74, further comprising a switch connected to the first node, the second node, and the memory pool.

Statement 78. An embodiment of the disclosure includes the system according to statement 77, wherein the switch includes a cache-coherent interconnect switch.

Statement 79. An embodiment of the disclosure includes the system according to statement 78, wherein the cache-coherent interconnect switch includes a Compute Express Link (CXL) switch.

Statement 80. An embodiment of the disclosure includes the system according to statement 62, wherein determining the memory report for the heterogeneous computing system includes determining a training latency for the heterogeneous computing system based at least in part on an information regarding the heterogeneous computing system.

Statement 81. An embodiment of the disclosure includes the system according to statement 80, wherein the information regarding the heterogeneous computing system is at least one of a model structure, a first number of layers, a second number of hidden dimensions, an input data dimension, a first capacity of the first local memory, a second capacity of the second local memory, a first computational capability of the first processing element, a second computational capability of the second processing element, a first bandwidth between the first processing element and a third processing element of the first node, a second bandwidth between the second processing element and a fourth processing element of the second node, and a third bandwidth between the first node and the second node.

Statement 82. An embodiment of the disclosure includes the system according to statement 62, wherein the memory report includes a latency for the heterogeneous computing system, a first memory consumption for the first local memory, a second memory consumption for the second local memory, and a third memory consumption for a memory pool.

Statement 83. An embodiment of the disclosure includes the system according to statement 62, wherein scheduling operations between the first node and the second node and evaluating the performance of the heterogeneous computing system based at least in part on the operations scheduled between the first node and the second node operate iteratively to attempt to optimize the operation of the heterogeneous computing system.

Statement 84. An embodiment of the disclosure includes the system according to statement 83, wherein the training framework is configured to use the configuration report in scheduling training in the heterogeneous computing system.

Statement 85. An embodiment of the disclosure includes the system according to statement 62, wherein:

assigning the first node of the heterogeneous computing system to use the first tensor parallel approach or the first data parallel approach based at least in part on the memory report includes assigning the first node of the heterogeneous computing system to use the first tensor parallel approach or the first data parallel approach based a comparison of the memory report with a first capacity of the first local memory; and

assigning the second node of the heterogeneous computing system to use the second tensor parallel approach or the second data parallel approach based at least in part on the memory report includes assigning the second node of the heterogeneous computing system to use the second tensor parallel approach or the second data parallel approach based a comparison of the memory report with a second capacity of the second local memory.

Statement 86. An embodiment of the disclosure includes the system according to statement 62, wherein scheduling operations between the first node and the second node includes:

determining a first configuration of the first node based at least in part on an information regarding the heterogeneous computing system, the first local memory, and a memory pool; and

determining a second configuration of the second node based at least in part on an information regarding the heterogeneous computing system, the second local memory, and the memory pool.

Statement 87. An embodiment of the disclosure includes the system according to statement 86, wherein:

determining a first configuration of the first node based at least in part on an information regarding the heterogeneous computing system, the first local memory, and the memory pool includes identifying a first data to store in the first local memory and a second data to store in the memory pool; and

determining a second configuration of the second node based at least in part on an information regarding the heterogeneous computing system, the second local memory, and the memory pool includes identifying a third data to store in the second local memory and a fourth data to store in the memory pool.

Statement 88. An embodiment of the disclosure includes the system according to statement 62, the non-transitory storage medium having stored thereon further instructions that, when executed by the machine, result in generating a report based on the evaluation of the performance of the heterogeneous computing system.

Statement 89. An embodiment of the disclosure includes the system according to statement 88, wherein the report includes a configuration file for use with a training framework.

Statement 90. An embodiment of the disclosure includes a heterogeneous computing system, comprising:

> a first node, including a first processing element including a first local memory; and
> a second node, including a second processing element including a second local memory; and

> a memory pool, accessible to the first processing element using a first access request and accessible to the second processing element using a second access request,
> wherein the first node includes a first capability, and
> wherein the second node includes a second capability, the second capability different from the first capability.

Statement 91. An embodiment of the disclosure includes the heterogeneous computing system according to statement 90, wherein:

> the first capability includes a first memory capability of the first local memory, a first computation capability of the first processing element, or a first bandwidth of the first node; and
> the second capability includes a second memory capability of the second local memory, a second computation capability of the second processing element, or a second bandwidth of the second node.

Statement 92. An embodiment of the disclosure includes the heterogeneous computing system according to statement 90, wherein:

> the first node further includes:

>> a first processor; and
>> a first memory coupled to the first processor;

> the second node further includes:

>> a second processor; and
>> a second memory coupled to the second processor;

> the first processing element is coupled to the first processor; and
> the second processing element is coupled to the second processor.

Statement 93. An embodiment of the disclosure includes the heterogeneous computing system according to statement 92, wherein:

> the first capability includes a first memory capability of the first local memory, a first computation capability of the first processing element, a second memory capability of the first memory, a second computation capability of the first processor, or a first bandwidth of the first node; and
> the second capability includes a third memory capability of the second local memory, a third computation capability of the second processing element, a fourth memory capability of the second memory, a fourth computation capability of the second processor, or a second bandwidth of the second node.

Statement 94. An embodiment of the disclosure includes the heterogeneous computing system according to statement 92, wherein:

> the first node further includes a first storage device coupled to the first processor; and
> the second node further includes a second storage device coupled to the second processor.

Statement 95. An embodiment of the disclosure includes the heterogeneous computing system according to statement 92, wherein:

the first processing element is configured to use the memory pool to bypass the first processor; and
the second processing element is configured to use the memory pool to bypass the second processor.

Statement 96. An embodiment of the disclosure includes the heterogeneous computing system according to statement 92, wherein the first processor does not use a Remote Direct Memory Access (RDMA) command to store a data from the first processing element into the second memory for use by the second processing element.

Statement 97. An embodiment of the disclosure includes the heterogeneous computing system according to statement 90, wherein:

the first local memory includes a third capability;
the second local memory includes a fourth capability; and
the third capability is different from the fourth capability.

Statement 98. An embodiment of the disclosure includes the heterogeneous computing system according to statement 90, wherein:

the first processing element is selected from a set including a first Central Processing Unit (CPU), a first Graphics Processing Unit (GPU), a first System on a Chip (SoC), a first Field Programmable Gate Array (FPGA), a first Application-Specific Integrated Circuit (ASIC), a first Neural Processing Unit (NPU), a first Tensor Processing Unit (TPU), or a first accelerator; and
the second processing element is selected from a set including a second CPU, a second GPU, a second SoC, a second FPGA, a second ASIC, a second NPU, a second TPU, or a second accelerator.

Statement 99. An embodiment of the disclosure includes the heterogeneous computing system according to statement 90, wherein:

the first local memory is selected from a set including a first Dynamic Random Access Memory (DRAM), a first Static Random Access Memory (SRAM), or a first High Bandwidth Memory (HBM); and
the second local memory is selected from a set including a second DRAM, a second SRAM, or a second HBM.

Statement 100.An embodiment of the disclosure includes the heterogeneous computing system according to statement 90, wherein:

the first access request includes a first load request or a first store request; and
the second access request includes a second load request or a second store request.

Statement 101.An embodiment of the disclosure includes the heterogeneous computing system according to statement 90, further comprising a switch connecting the first node, the second node, and the memory pool.

Statement 102.An embodiment of the disclosure includes the heterogeneous computing system according to statement 101, wherein:

the memory pool includes a cache-coherent interconnect memory pool; and
the switch includes a cache-coherent interconnect switch.

Statement 103.An embodiment of the disclosure includes the heterogeneous computing system according to statement 102, wherein:

the cache-coherent interconnect memory pool includes a Compute Express Link (CXL) memory pool; and
the cache-coherent interconnect switch includes a CXL switch.

Statement 104.An embodiment of the disclosure includes the heterogeneous computing system according to statement 90, wherein the memory pool includes a cache-coherent interconnect memory pool.

Statement 105.An embodiment of the disclosure includes the heterogeneous computing system according to statement 104, wherein the cache-coherent interconnect memory pool includes a Compute Express Link (CXL) memory pool.

Statement 106.An embodiment of the disclosure includes the heterogeneous computing system according to statement 90, wherein the memory pool includes a memory module.

Statement 107.An embodiment of the disclosure includes the heterogeneous computing system according to statement 106, wherein the memory module includes a Dual Inline Memory Module (DIMM).

Statement 108. An embodiment of the disclosure includes the heterogeneous computing system according to statement 90, wherein:

the first processing element is configured to issue a store request to store a data in the memory pool; and
the second processing element is configured to issue a load request to load the data from the memory pool.

Statement 109. An embodiment of the disclosure includes the heterogeneous computing system according to statement 108, wherein a first address where the data is stored in the memory pool is assigned to the first processing element.

Statement 110. An embodiment of the disclosure includes the heterogeneous computing system according to statement 109, wherein the first processing element is configured to signal the second processing element that the data is stored in the memory pool.

Statement 111. An embodiment of the disclosure includes the heterogeneous computing system according to statement 109, wherein the second processing element is configured to access the data from the memory pool based on operations being synchronized between the first node and the second node.

Statement 112. An embodiment of the disclosure includes the heterogeneous computing system according to statement 90, wherein:

the first processing element operates on a first data of a first size;
the second processing element operates on a second data of a second size; and
the first size is different from the second size.

Statement 113. An embodiment of the disclosure includes the heterogeneous computing system according to statement 112, wherein operations are synchronized between the first node and the second node based on the first size being different from the second size.

Statement 114. An embodiment of the disclosure includes a method, comprising:

executing an operation on a first processing element of a first node in a heterogeneous computing system to generate an output; and
storing the output in a memory pool of the heterogeneous computing system,
wherein the heterogeneous computing system includes:

the first node, including the first processing element including a first local memory; and
a second node, including a second processing element including a second local memory; and

the memory pool, accessible to the first processing element using a first access request and accessible to the second processing element using a second access request, and
wherein the first node includes a first capability, and
wherein the second node includes a second capability, the second capability different from the first capability.

Statement 115. An embodiment of the disclosure includes the method according to statement 114, wherein:

the first capability includes a first memory capability of the first local memory, a first computation capability of the first processing element, or a first bandwidth of the first node; and
the second capability includes a second memory capability of the second local memory, a second computation capability of the second processing element, or a second bandwidth of the second node.

Statement 116. An embodiment of the disclosure includes the method according to statement 114, wherein:

the first node further includes:

a first processor; and
a first memory coupled to the first processor;

the second node further includes:

a second processor; and

a second memory coupled to the second processor;

the first processing element is coupled to the first processor; and
the second processing element is coupled to the second processor.

Statement 117. An embodiment of the disclosure includes the method according to statement 116, wherein:

the first capability includes a first memory capability of the first local memory, a first computation capability of the first processing element, a second memory capability of the first memory, a second computation capability of the first processor, or a first bandwidth of the first node; and
the second capability includes a third memory capability of the second local memory, a third computation capability of the second processing element, a fourth memory capability of the second memory, a fourth computation capability of the second processor, or a second bandwidth of the second node.

Statement 118. An embodiment of the disclosure includes the method according to statement 116, wherein:

the first node further includes a first storage device coupled to the first processor; and
the second node further includes a second storage device coupled to the second processor.

Statement 119. An embodiment of the disclosure includes the method according to statement 116, wherein:

the first processing element is configured to use the memory pool to bypass the first processor; and
the second processing element is configured to use the memory pool to bypass the second processor.

Statement 120. An embodiment of the disclosure includes the method according to statement 116, wherein the first processor does not use a Remote Direct Memory Access (RDMA) command to store a data from the first processing element into the second memory for use by the second processing element.

Statement 121. An embodiment of the disclosure includes the method according to statement 114, wherein:

the first local memory includes a third capability;
the second local memory includes a fourth capability; and
the third capability is different from the fourth capability.

Statement 122. An embodiment of the disclosure includes the method according to statement 114, wherein:

the first processing element is selected from a set including a first Central Processing Unit (CPU), a first Graphics Processing Unit (GPU), a first System on a Chip (SoC), a first Field Programmable Gate Array (FPGA), a first Application-Specific Integrated Circuit (ASIC), a first Neural Processing Unit (NPU), a first Tensor Processing Unit (TPU), or a first accelerator; and
the second processing element is drawn from a set including a second CPU, a second GPU, a second SoC, a second FPGA, a second ASIC, a second NPU, a second TPU, or a second accelerator.

Statement 123. An embodiment of the disclosure includes the method according to statement 114, wherein:

the first local memory is selected from a set including a first Dynamic Random Access Memory (DRAM), a first Static Random Access Memory (SRAM), or a first High Bandwidth Memory (HBM); and
the second local memory is selected from a set including a second DRAM, a second SRAM, or a second HBM.

Statement 124. An embodiment of the disclosure includes the method according to statement 114, wherein:

the first access request includes a first load request or a first store request; and
the second access request includes a second load request or a second store request.

Statement 125. An embodiment of the disclosure includes the method according to statement 114, further comprising a switch connecting the first node, the second node, and the memory pool.

Statement 126. An embodiment of the disclosure includes the method according to statement 125, wherein:

the memory pool includes a cache-coherent interconnect memory pool; and

the switch includes a cache-coherent interconnect switch.

Statement 127. An embodiment of the disclosure includes the method according to statement 126, wherein:

the cache-coherent interconnect memory pool includes a Compute Express Link (CXL) memory pool; and
the cache-coherent interconnect switch includes a CXL switch.

Statement 128. An embodiment of the disclosure includes the method according to statement 114, wherein the memory pool includes a cache-coherent interconnect memory pool.

Statement 129. An embodiment of the disclosure includes the method according to statement 128, wherein the cache-coherent interconnect memory pool includes a Compute Express Link (CXL) memory pool.

Statement 130. An embodiment of the disclosure includes the method according to statement 114, wherein the memory pool includes a memory module.

Statement 131. An embodiment of the disclosure includes the method according to statement 130, wherein the memory module includes a Dual Inline Memory module (DIMM).

Statement 132. An embodiment of the disclosure includes the method according to statement 114, further comprising retrieving the output from the memory pool by the second processing element.

Statement 133. An embodiment of the disclosure includes the method according to statement 132, wherein storing the output in the memory pool of the heterogeneous computing system includes storing the output in the memory pool of the heterogeneous computing system at a first address assigned to the first processing element.

Statement 134. An embodiment of the disclosure includes the method according to statement 133, further comprising signaling the second processing element by the first processing element that the output is stored in the memory pool.

Statement 135. An embodiment of the disclosure includes the method according to statement 133, wherein the second processing element is configured to access the output from the memory pool based on operations being synchronized between the first node and the second node.

Statement 136. An embodiment of the disclosure includes the method according to statement 114, wherein:

the first processing element operates on a first data of a first size;
the second processing element operates on a second data of a second size; and
the first size is different from the second size.

Statement 137. An embodiment of the disclosure includes the method according to statement 136, wherein operations are synchronized between the first node and the second node based on the first size being different from the second size.

Statement 138. An embodiment of the disclosure includes a system, comprising a non-transitory storage medium, the non-transitory storage medium having stored thereon instructions that, when executed by a machine, result in:

executing an operation on a first processing element of a first node in a heterogeneous computing system to generate an output; and
storing the output in a memory pool of the heterogeneous computing system,
wherein the heterogeneous computing system includes:

the first node, including the first processing element including a first local memory; and
a second node, including a second processing element including a second local memory; and

the memory pool, accessible to the first processing element using a first access request and accessible to the second processing element using a second access request, and
wherein the first node includes a first capability, and
wherein the second node includes a second capability, the second capability different from the first capability.

Statement 139. An embodiment of the disclosure includes the system according to statement 138, wherein:

the first capability includes a first memory capability of the first local memory, a first computation capability of the first processing element, or a first bandwidth of the first node; and
the second capability includes a second memory capability of the second local memory, a second computation capability of the second processing element, or a second bandwidth of the second node.

Statement 140. An embodiment of the disclosure includes the system according to statement 138, wherein:

the first node further includes:

a first processor; and
a first memory coupled to the first processor;

the second node further includes:

a second processor; and
a second memory coupled to the second processor;

the first processing element is coupled to the first processor; and
the second processing element is coupled to the second processor.

Statement 141. An embodiment of the disclosure includes the system according to statement 140, wherein:

the first capability includes a first memory capability of the first local memory, a first computation capability of the first processing element, a second memory capability of the first memory, a second computation capability of the first processor, or a first bandwidth of the first node; and
the second capability includes a third memory capability of the second local memory, a third computation capability of the second processing element, a fourth memory capability of the second memory, a fourth computation capability of the second processor, or a second bandwidth of the second node.

Statement 142. An embodiment of the disclosure includes the system according to statement 140, wherein:

the first node further includes a first storage device coupled to the first processor; and
the second node further includes a second storage device coupled to the second processor.

Statement 143. An embodiment of the disclosure includes the system according to statement 140, wherein:

the first processing element is configured to use the memory pool to bypass the first processor; and
the second processing element is configured to use the memory pool to bypass the second processor.

Statement 144. An embodiment of the disclosure includes the system according to statement 140, wherein the first processor does not use a Remote Direct Memory Access (RDMA) command to write a data from the first processing element into the second memory for use by the second processing element.

Statement 145. An embodiment of the disclosure includes the system according to statement 138, wherein:

the first local memory includes a third capability;
the second local memory includes a fourth capability; and
the third capability is different from the fourth capability.

Statement 146. An embodiment of the disclosure includes the system according to statement 138, wherein:

the first processing element is selected from a set including a first Central Processing Unit (CPU), a first Graphics Processing Unit (GPU), a first System on a Chip (SoC), a first Field Programmable Gate Array (FPGA), a first Application-Specific Integrated Circuit (ASIC), a first Neural Processing Unit (NPU), a first Tensor Processing Unit (TPU), or a first accelerator; and
the second processing element is selected from a set including a second CPU, a second GPU, a second SoC, a second FPGA, a second ASIC, a second NPU, a second TPU, or a second accelerator.

Statement 147. An embodiment of the disclosure includes the system according to statement 138, wherein:

the first local memory is selected from a set including a first Dynamic Random Access Memory (DRAM), a first Static Random Access Memory (SRAM), or a first High Bandwidth Memory (HBM); and
the second local memory (140-2) is selected from a set including a second DRAM, a second SRAM, or a second HBM.

Statement 148. An embodiment of the disclosure includes the system according to statement 138, wherein:

the first access request includes a first load request or a first store request; and

the second access request includes a second load request or a second store request.

Statement 149. An embodiment of the disclosure includes the system according to statement 138, the heterogeneous computing system further including a switch connecting the first node, the second node, and the memory pool.

Statement 150. An embodiment of the disclosure includes the system according to statement 149, wherein:

the memory pool includes a cache-coherent interconnect memory pool; and

the switch includes a cache-coherent interconnect switch.

Statement 151. An embodiment of the disclosure includes the system according to statement 150, wherein:

the cache-coherent interconnect memory pool includes a Compute Express Link (CXL) memory pool; and

the cache-coherent interconnect switch includes a CXL switch.

Statement 152. An embodiment of the disclosure includes the system according to statement 138, wherein the memory pool includes a cache-coherent interconnect memory pool.

Statement 153. An embodiment of the disclosure includes the system according to statement 152, wherein the cache-coherent interconnect memory pool includes a Compute Express Link (CXL) memory pool.

Statement 154. An embodiment of the disclosure includes the system according to statement 138, wherein the memory pool includes a memory module.

Statement 155. An embodiment of the disclosure includes the system according to statement 154, wherein the memory module includes a Dual Inline Memory module (DIMM).

Statement 156. An embodiment of the disclosure includes the system according to statement 138, the non-transitory storage medium having stored thereon further instructions that, when executed by the machine, result in retrieving the output from the memory pool by the second processing element.

Statement 157. An embodiment of the disclosure includes the system according to statement 156, wherein storing the output in the memory pool of the heterogeneous computing system includes storing the output in the memory pool of the heterogeneous computing system at a first address assigned to the first processing element.

Statement 158. An embodiment of the disclosure includes the system according to statement 157, the non-transitory storage medium having stored thereon further instructions that, when executed by the machine, result in signaling the second processing element by the first processing element that the output is stored in the memory pool.

Statement 159. An embodiment of the disclosure includes the system according to statement 157, wherein the second processing element is configured to access the output from the memory pool based on operations being synchronized between the first node and the second node.

Statement 160. An embodiment of the disclosure includes the system according to statement 138, wherein:

the first processing element operates on a first data of a first size;

the second processing element operates on a second data of a second size; and

the first size is different from the second size.

Statement 161. An embodiment of the disclosure includes the system according to statement 160, wherein operations are synchronized between the first node and the second node based on the first size being different from the second size.

Consequently, in view of the wide variety of permutations to the embodiments described herein, this detailed description and accompanying material is intended to be illustrative only, and should not be taken as limiting the scope of the disclosure. What is claimed as the disclosure, therefore, is all such modifications as may come within the scope and spirit of the following claims and equivalents thereto.

**Claims**

1.  A scheduling system, comprising:

a simulator (435) to process an information regarding a heterogeneous computing system (305) and to generate a first output;

an intra-node scheduler (440) to schedule operations within a first node (105-1) and within a second node (105-2) based on the first output of the simulator (435) and to generate a second output;

an inter-node scheduler (445) to schedule operations between the first node (105-1) and the second node (105-2) based on the second output and to generate a third output; and

an evaluator (450) to evaluate a performance of the heterogeneous computing system (305) based on the third output,

wherein the heterogeneous computing system (305) includes:

the first node (105-1), wherein the first node (105-1) includes a first processing element (135-1) including a first local memory (140-1); and

the second node (105-2), wherein the second node (105-2) includes a second processing element including a second local memory (140-2),

wherein the first node (105-1) includes a first capability, and

wherein the second nodes (105-2) includes a second capability, which is different from the first capability.

2. The scheduling system according to claim 1, wherein:

the first capability includes a first memory capability of the first local memory (140-1), a first computation capability of the first processing element (135-1), or a first bandwidth of the first node (105-1); and

the second capability includes a second memory capability of the second local memory (140-2), a second computation capability of the second processing element (135-2), or a second bandwidth of the second node (105-2).

3. The scheduling system according to claim 1 or 2, wherein:

the first local memory (140-1) is selected from a set including a first Dynamic Random Access Memory, DRAM, a first Static Random Access Memory, SRAM, or a first High Bandwidth Memory, HBM; and

the second local memory (140-2) is selected from a set including a second DRAM, a second SRAM, or a second HBM.

4. The scheduling system according to any one of claims 1 to 3, wherein the heterogeneous computing system (305) further includes a memory pool (145), accessible to the first processing element (135-1) using a first access request and accessible to the second processing element using a second access request.

5. The scheduling system according to any one of claims 1 to 4, wherein:

the simulator (435) is configured to generate the first output based on the information regarding the heterogeneous computing system (305);

the intra-node scheduler (440) is configured to generate the second output based on the first output;

the inter-node scheduler (445) is configured to generate the third output based on the second output; and

the evaluator (450) is configured to generate a fourth output based on the third output.

6. The scheduling system according to any one of claims 1 to 5, wherein the first output includes a first memory report for the first node (105-1) and a second memory report for the second node (105-2).

7. The scheduling system according to any one of claims 1 to 5, wherein the first output includes at least one of a latency for the heterogeneous computing system (305), a first memory consumption for the first local memory (140-1), a second memory consumption for the second local memory (140-2), or a third memory consumption for a memory pool (145).

8. The scheduling system according to any one of claims 1 to 7, wherein:

the second output includes a first information for the first node (105-1) and a second information for the second node (105-2); and

the intra-node scheduler (440) is configured to generate the first information for the first node (105-1) based at least in part on the first capability, and the first local memory (140-1), and to generate the second information for the second node (105-2) based at least in part on the second capability, and the second local memory (140-2).

9. The scheduling system according to any one of claims 1 to 8, wherein:

the third output includes a first configuration for the first node (105-1) and a second configuration for the second node (105-2); and

the inter-node scheduler (445) is configured to generate the first configuration for the first node (105-1) based at least in part on the information regarding the heterogeneous computing system (305), the first memory, the first local memory (140-1), and a memory pool (145), and to generate the second configuration for the second node (105-2) based at least in part on the information regarding the heterogeneous computing system (305), the second memory, the second local memory (140-2), and the memory pool (145).

10. A method, comprising:

determining (905) a memory report for a heterogeneous computing system (305);

assigning (910) a first node (105-1) of the heterogeneous computing system (305) to use a first tensor parallel approach or a first data parallel approach based at least in part on the memory report;

assigning (915) a second node (105-2) of the heterogeneous computing system (305) to use a second tensor parallel approach or a second data parallel approach based at least in part on the memory report;

scheduling (920)= operations between the first node (105-1) and the second node (105-2); and

evaluating (925) a performance of the heterogeneous computing system (305) based at least in part on the operations scheduled between the first node (105-1) and the second node (105-2),

wherein the heterogeneous computing system (305) includes:

the first node (105-1), wherein the first node (105-1) includes a first processing element (135-1) including a first local memory (140-1); and

the second node (105-2), wherein the second node (105-2) includes a second processing element (135-2) including a second local memory (140-2),

wherein the first node (105-1) includes a first capability, and

wherein the second node (105-2) includes a second capability, which is different from the first capability.

11. The method according to claim 10, wherein determining the memory report for the heterogeneous computing system (305) includes determining a training latency for the heterogeneous computing system (305) based at least in part on an information regarding the heterogeneous computing system (305).

12. The method according to claim 10 or 11, wherein scheduling operations between the first node (105-1) and the second node (105-2) and evaluating the performance of the heterogeneous computing system (305) based at least in part on the operations scheduled between the first node (105-1) and the second node (105-2) operate iteratively to attempt to optimize the operation of the heterogeneous computing system (305).

13. The method according to any one of claims 10 to 12, wherein:

assigning the first node (105-1) of the heterogeneous computing system (305) to use the first tensor parallel approach or the first data parallel approach based at least in part on the memory report includes assigning the first node (105-1) of the heterogeneous computing system (305) to use the first tensor parallel approach or the first data parallel approach based a comparison of the memory report with a first capacity of the first local memory (140-1); and

assigning the second node (105-2) of the heterogeneous computing system (305) to use the second tensor parallel approach or the second data parallel approach based at least in part on the memory report includes assigning the second node (105-2) of the heterogeneous computing system (305) to use the second tensor parallel approach or the second data parallel approach based a comparison of the memory report with a second capacity of the second local memory (140-2).

14. The method according to any one of claims 10 to 13, wherein scheduling operations between the first node (105-1) and the second node (105-2) includes:

determining a first configuration of the first node (105-1) based at least in part on an information regarding the heterogeneous computing system (305), the first local memory (140-1), and a memory pool (145); and

determining a second configuration of the second node (105-2) based at least in part on an information regarding the heterogeneous computing system (305), the second local memory (140-2), and the memory pool (145).

15. The method according to claim 14, wherein:

determining a first configuration of the first node (105-1) based at least in part on an information regarding the heterogeneous computing system (305), the first local memory (140-1), and the memory pool (145) includes identifying a first data to store in the first local memory (140-1) and a second data to store in the memory pool (145); and
determining a second configuration of the second node (105-2) based at least in part on an information regarding the heterogeneous computing system (305), the second local memory (140-2), and the memory pool includes identifying a third data to store in the second local memory (140-2) and a fourth data to store in the memory pool (145).

**FIG. 1**

**FIG. 2**

**FIG. 3**

Processor 410

Memory Controller 425

Device Driver 430

Memory 415

Storage Device 420

Intra-Node Scheduler 440

Inter-Node Scheduler 445

Evaluator 450

Simulator 435

405

FIG. 4

135-1

GPU

| 0 | 1 | 2 |

505-1  505-2  505-3

5 ms

135-2

GPU

| 0 | 1 | 2 |

5 ms

135-3

GPU

| 0 | 1 | 2 |

5 ms

Total time to move data through all 3 GPUs: 10 ms

135-1

GPU

| 0 | 1 | 2 |

510-1  510-2  510-3

8 ms

135-2

GPU

| 0 | 1 | 2 |

3 ms

135-3

GPU

| 0 | 1 | 2 |

1 ms

Total time to move data through all 3 GPUs: 16 ms

**FIG. 5**

EP 4 693 042 A1

GPU

310-3

315-3

135-3

GPU

310-2

315-2

135-2

605

CXL Switch

GPU

310-1

315-1

135-1

CXL Memory Pool

610-3

610-2

610-1

145

**FIG. 6**

Forward
GPU

| Compute *n* |
|---|
| S Act. *n*-1 | Weights *n*+1 |

Backward
GPU

| Compute *n* |
|---|
| Gradients *n*-1 | Weights *n*+1 | L Act. *n*+1 |

Backward
CPU

| Optimizer *n*-1 |
|---|

**FIG. 7**

Start

435

805
User input (model
structure, hardware
configuration)

810
Peak GPU memory
utilization
computation

440

815
Yes — Peak
utilization > GPU
memory cap? — No

820
Tensor parallel
approach

825
Data parallel
approach

A

**FIG. 8A**

FIG. 8B

Start

905
Determine a
memory report for a
heterogeneous
computing system

910
Assign a first node
of the
heterogeneous
computing system to
use a first tensor
parallel approach or
a first data parallel
approach based at
least in part on the
memory report

915
Assign a second
node of the
heterogeneous
computing system to
use a second tensor
parallel approach or
a second data
parallel approach
based at least in
part on the memory
report

A

**FIG. 9A**

A

930

920

Schedule operations
between the first
node and the
second node

925

Evaluate a
performance of the
heterogeneous
computing system
based at least in
part on the
operations
scheduled between
the first node and
the second node

End

**FIG. 9B**

**FIG. 10**

920

Start

1105

Determine configurations of nodes using information about the system and the memories

1110

Identify data for each node to store in HBM, DRAM, and CXL memory pool

1115

Determine data dependencies for the nodes

1120

Overlap computation and communciation

End

**FIG. 11**

925

Start

1205

Generate a report/
configuration file for
scheduling data
processing

End

**FIG. 12**

```
         ( Start )
```

1305

Execute an
operation on a first
processing element
of a first node in a
heterogeneous
computing system to
generate an output

1310

Store the output in a
memory pool of the
heterogeneous
computing system

```
         ( End )
```

**FIG. 13**

1310

**Start**

1515

1405

Retrieve the output from the memory pool by a second processing element

1505

Store the output at an address assigned to the first processing element

1520

1510

End

Signal the second processing element that the data is stored in the memory pool

End

**FIG. 14**          **FIG. 15**

## EUROPEAN SEARCH REPORT

Europäisches
Patentamt
European
Patent Office
Office européen
des brevets

**Application Number**

EP 25 19 2072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANG YINAN ET AL: "Simulating LLM Training in CXL-Based Heterogeneous Computing Cluster", IEEE INFOCOM 2024 - IEEE CONFERENCE ON COMPUTER COMMUNICATIONS WORKSHOPS (INFOCOM WKSHPS), IEEE, 20 May 2024 (2024-05-20), pages 1-6, XP034666998, DOI: 10.1109/INFOCOMWKSHPS61880.2024.10620705 [retrieved on 2024-08-13] * Section A. The Goal of Simulation; page 2, right-hand column * * Section B. HeterSim; page 3, left-hand column * * Section 2) Workload LAyer; page 3, left-hand column * * Section 4) Communicaiton LAyer; page 4, left-hand column * * figures 3,4 * * page 3, right-hand column, lines 28-30 * * Section B. Computer Express Link; page 2, left-hand column * * page 4, left-hand column, lines 9-13 * ----- | 1-15 | INV. G06F9/48 G06F11/34 G06N20/00 |
| A | JIANGFEI DUAN ET AL: "Efficient Training of Large Language Models on Distributed Infrastructures: A Survey", ARXIV.ORG, CORNELL UNIVERSITY LIBRARY, 201 OLIN LIBRARY CORNELL UNIVERSITY ITHACA, NY 14853, 29 July 2024 (2024-07-29), XP091834313, * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 22 December 2025 | Manfrin, Max |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

....................................................

& : member of the same patent family, corresponding
   document

EPO FORM 1503 03.82 (P4C01)